(19) Europäisches Patentamt
European Patent Office
Office européen des brevets

(11) **EP 4 410 916 A1**

(12) **EUROPEAN PATENT APPLICATION**
published in accordance with Art. 153(4) EPC


(43) Date of publication:
**07.08.2024 Bulletin 2024/32**

(21) Application number: **22876344.7**

(22) Date of filing: **28.09.2022**

(51) International Patent Classification (IPC):
***C09J 11/06*** (2006.01) ***C09J 11/08*** (2006.01)
***C09J 133/00*** (2006.01) ***C09J 167/00*** (2006.01)
***C09J 175/04*** (2006.01) ***C09J 201/00*** (2006.01)
***C09J 7/38*** (2018.01)

(52) Cooperative Patent Classification (CPC):
**C09J 7/38; C09J 11/06; C09J 11/08; C09J 133/00; C09J 167/00; C09J 175/04; C09J 201/00**

(86) International application number:
**PCT/JP2022/036195**

(87) International publication number:
**WO 2023/054478 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161475**
**24.02.2022 JP 2022026640**



(71) Applicant: **NITTO DENKO CORPORATION**
**Ibaraki-shi**
**Osaka 567-8680 (JP)**

(72) Inventors:
- **TSUMURA Daisuke**
**Ibaraki-shi, Osaka 567-8680 (JP)**
- **MIZUHARA Ginji**
**Ibaraki-shi, Osaka 567-8680 (JP)**
- **KURODA Tomoharu**
**Ibaraki-shi, Osaka 567-8680 (JP)**

(74) Representative: **Gill Jennings & Every LLP**
**The Broadgate Tower**
**20 Primrose Street**
**London EC2A 2ES (GB)**


(54) **ADHESIVE COMPOSITION, ADHESIVE SHEET, AND JOINED BODY**


(57) An object of the present invention is to provide a pressure-sensitive adhesive composition whose adhesive force is sufficiently reduced by applying a voltage even after storage in a high-temperature and high-humidity environment. The present invention relates to a pressure-sensitive adhesive composition containing a first polymer as a base polymer and an ionic liquid and further containing a second polymer having a glass transition temperature Tg of 40°C to 180°C.


FIG. 1

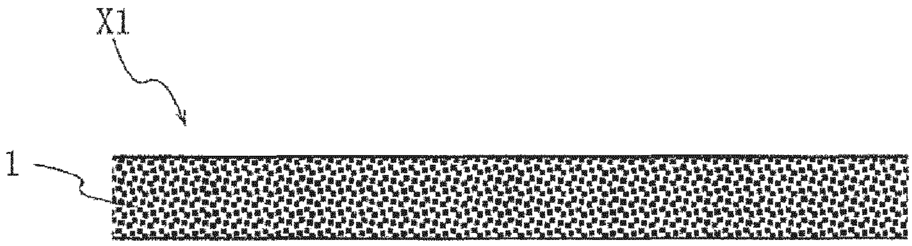


EP 4 410 916 A1

## Description

### TECHNICAL FIELD

The present invention relates to a pressure-sensitive adhesive composition, a pressure-sensitive adhesive sheet including a pressure-sensitive adhesive layer formed of the pressure-sensitive adhesive composition, and a bonded body of the pressure-sensitive adhesive sheet and an adherend.

### BACKGROUND ART

There are growing demands regarding, for example, reworking for improving yield in electronic-component manufacturing steps and the like, and recycling for disassembling and recovering components after use. In order to meet such demands, a double-sided pressure-sensitive adhesive sheet having a certain adhesive force and certain detachability is sometimes used for bonding members in electronic-component manufacturing steps and the like.

As the double-sided pressure-sensitive adhesive sheet that achieves the adhesive force and the detachability, a pressure-sensitive adhesive sheet (electrically debondable pressure-sensitive adhesive sheet) is known in which an ionic liquid containing cations and anions is used for a component forming a pressure-sensitive adhesive composition and in which debonding is performed by applying a voltage to a pressure-sensitive adhesive layer (Patent Literature 1).

In the electrically debondable pressure-sensitive adhesive sheet of Patent Literature 1, it is considered that by applying a voltage, reduction occurs in a cathode side by moving of the cations of the ionic liquid, oxidation occurs in an anode side by moving of the anions of the ionic liquid, and thus an adhesive force of an adhesive interface becomes weak and debonding is easily performed.

In Patent Literature 2, for example, a pressure-sensitive adhesive composition whose adhesive force is sufficiently reduced by applying a voltage even under a low-humidity environment such as winter has been studied.

### CITATION LIST

### PATENT LITERATURE

Patent Literature 1: WO2017/064918
Patent Literature 2: JP2020-164778A

### SUMMARY OF INVENTION

### TECHNICAL PROBLEM

In the electrically debondable pressure-sensitive adhesive sheet, preferably, the members can be firmly bonded to each other when no voltage is applied, and the members can be debonded with a small force when a voltage is applied. Therefore, in the electrically debondable pressure-sensitive adhesive sheet, preferably, a rate of decrease in adhesive force due to voltage application is large.

However, in a pressure-sensitive adhesive composition in the related art, a rate of decrease in adhesive force due to voltage application may decrease over time. As a result of studies by the present inventors, the inventors have found a new problem that a rate of decrease in adhesive force due to voltage application decreases after storage in a high-temperature environment with high humidity such as summer.

The present invention has been accomplished in view of the above, and an object of the present invention is to provide a pressure-sensitive adhesive composition capable of forming a pressure-sensitive adhesive layer excellent in moisture and heat stability in which an adhesive force is sufficiently reduced by applying a voltage even after storage in a high-temperature and high-humidity environment, and a pressure-sensitive adhesive sheet including a pressure-sensitive adhesive layer formed of the pressure-sensitive adhesive composition.

### SOLUTION TO PROBLEM

According to the studies of the present inventors, it has been found that the reason why a rate of decrease in adhesive force due to voltage application after storage in a high-temperature and high-humidity environment decreases is that a viscosity of a pressure-sensitive adhesive layer increases in the high-temperature and high-humidity environment and cations and anions of an ionic liquid are less likely to move.

As a result of further studies by the present inventors, the following findings are obtained.

The present inventors have found that when a polymer having Tg of 40°C to 180°C is further contained in addition to a base polymer, the ability of electro-debonding is good even after storage in a high-temperature and high-humidity environment, that is, a rate of decrease in adhesive force due to voltage application is large.

A solution to the above problem is as follows.

(1) A pressure-sensitive adhesive composition containing a first polymer as a base polymer and an ionic liquid, the pressure-sensitive adhesive composition further including:
a second polymer having a glass transition temperature (Tg) of 40°C to 180°C.
(2) The pressure-sensitive adhesive composition according to (1), in which a difference in HSP value between the first polymer and the second polymer is 0 to 3.
(3) The pressure-sensitive adhesive composition according to (1), in which
the second polymer contains an organic polymer compound, and a content of the organic polymer compound in the second polymer is 1 to 50 parts by mass with respect to 100 parts by mass of the first polymer.
(4) The pressure-sensitive adhesive composition according to (1), in which
an anion of the ionic liquid contains at least one selected from the group consisting of a bis(fluorosulfonyl)imide anion and a bis(trifluoromethanesulfonyl)imide anion.
(5) The pressure-sensitive adhesive composition according to (1), in which
a cation of the ionic liquid contains at least one selected from the group consisting of a nitrogen-containing onium cation, a sulfur-containing onium cation, and a phosphorus-containing onium cation.
(6) The pressure-sensitive adhesive composition according to (1), in which a content of the ionic liquid is 0.5 parts by mass or more and 30 parts by mass or less with respect to 100 parts by mass of the first polymer.
(7) The pressure-sensitive adhesive composition according to (1), in which
the first polymer contains at least one selected from the group consisting of a polyester-based polymer, a urethane-based polymer, and an acrylic polymer having a carboxyl group, an alkoxy group, a hydroxyl group and/or an amide bond.
(8) The pressure-sensitive adhesive composition according to (1), in which
the second polymer contains a tackifying resin.
(9) The pressure-sensitive adhesive composition according to (8), in which
the tackifying resin has a softening point of 100°C or higher.
(10) The pressure-sensitive adhesive composition according to (8), in which
a content of the tackifying resin is 1 to 50 parts by mass with respect to 100 parts by mass of the first polymer.
(11) The pressure-sensitive adhesive composition according to (8), in which
the tackifying resin is a terpene-based tackifying resin or a rosin-based tackifying resin.
(12) The pressure-sensitive adhesive composition according to (1), which is used for electrical debonding.
(13) A pressure-sensitive adhesive sheet including:
a pressure-sensitive adhesive layer formed of the pressure-sensitive adhesive composition according to any one of (1) to (12).
(14) A bonded body including:

the pressure-sensitive adhesive sheet according to (13); and
a conductive material, in which
the pressure-sensitive adhesive layer is adhered to the conductive material.

## ADVANTAGEOUS EFFECTS OF INVENTION

An adhesive force of the pressure-sensitive adhesive composition according to the present invention is sufficiently reduced by applying a voltage even after storage in a high-temperature and high-humidity environment.

## BRIEF DESCRIPTION OF DRAWINGS

[FIG. 1] FIG. 1 is a cross-sectional view showing an example of a pressure-sensitive adhesive sheet according to the present invention.
[FIG. 2] FIG. 2 is a cross-sectional view showing an example of a laminate structure of the pressure-sensitive adhesive sheet according to the present invention.
[FIG. 3] FIG. 3 is a cross-sectional view showing another example of the laminate structure of the pressure-sensitive

adhesive sheet according to the present invention.

[FIG. 4] FIG. 4 is a cross-sectional view showing an outline of a method of a 180° peel test in Examples.

DESCRIPTION OF EMBODIMENTS

Hereinafter, embodiments of the present invention will be described in detail. The present invention is not limited to the embodiments to be described below.

[Pressure-sensitive Adhesive Composition]

A pressure-sensitive adhesive composition according to an embodiment of the present invention contains a first polymer as a base polymer and an ionic liquid, and further contains a second polymer having Tg of 40°C to 180°C.

The pressure-sensitive adhesive composition according to the embodiment of the present invention is preferably used for electrical debonding.

Hereinafter, the pressure-sensitive adhesive composition will be described.

In the present specification, the first polymer may be referred to as a "base polymer".

The base polymer of the pressure-sensitive adhesive composition according to the present embodiment refers to a main component of the polymer contained in the pressure-sensitive adhesive composition. In the specification, the term "main component" refers to a component contained in an amount of more than 50% by mass unless otherwise specified.

In the present specification, an adhesive force when no voltage is applied may be referred to as an "initial adhesive force".

A composition containing components other than the ionic liquid in the pressure-sensitive adhesive composition may be referred to as an "ionic liquid-free pressure-sensitive adhesive composition".

A pressure-sensitive adhesive layer formed of the ionic liquid-free pressure-sensitive adhesive composition may be referred to as an "ionic liquid-free pressure-sensitive adhesive layer".

A property of decreasing the adhesive force by application of a voltage may be referred to as " the ability of electro-debonding", and a matter that a rate of decrease in adhesive force due to voltage application is large may be referred to as "excellent ability of electro-debonding".

<Components of Pressure-sensitive Adhesive Composition>

(First Polymer (Base Polymer))

The pressure-sensitive adhesive composition according to the embodiment of the present invention contains a first polymer as a base polymer. In the embodiment of the present invention, the base polymer is not limited as long as the base polymer is a common organic polymer compound, and examples thereof include a polymerized product or a partially polymerized product of monomers. The monomers may be one kind of monomer and also be a monomer mixture of two or more kinds of monomers. The partially polymerized product means a polymerized product in which one or more components of the monomer or the monomer mixture are partially polymerized.

The first polymer in the embodiment of the present invention is not limited as long as the first polymer is usually used as a pressure-sensitive adhesive and has adhesiveness. Examples thereof include an acrylic polymer, a rubber-based polymer, a vinyl alkyl ether-based polymer, a silicone-based polymer, a polyester-based polymer, a polyamide-based polymer, a urethane-based polymer, a fluorine-based polymer, and an epoxy-based polymer.

The polymers may be used alone or in combination of two or more kinds thereof.

The first polymer in the embodiment of the present invention preferably contains at least one selected from the group consisting of a polyester-based polymer, a urethane-based polymer, and an acrylic polymer having a carboxyl group, an alkoxy group, a hydroxyl group and/or an amide bond. The polyester-based polymer and the urethane-based polymer have hydroxyl groups that are easily polarized at terminals, and in the acrylic polymer having a carboxyl group, an alkoxy group, a hydroxyl group and/or an amide bond, the carboxyl group, the alkoxy group, the hydroxyl group and/or the amide bond are easily polarized. Thus, by using these polymers, it is possible to obtain a pressure-sensitive adhesive layer exhibiting an excellent adhesive force when no voltage is applied.

A total content of the base polymer in all the polymers contained in the pressure-sensitive adhesive composition according to the embodiment of the present invention is preferably 60% by mass or more, and more preferably 80% by mass or more.

In particular, from the viewpoint of cost, productivity, and increasing the initial adhesive force, the polymer in the embodiment of the present invention is preferably the acrylic polymer, and more preferably the acrylic polymer having a carboxyl group, an alkoxy group, a hydroxyl group and/or an amide bond.

That is, the pressure-sensitive adhesive composition according to the embodiment of the present invention is preferably an acrylic pressure-sensitive adhesive composition containing the acrylic polymer as the base polymer.

The acrylic polymer preferably contains a monomer uni t derived from a (meth)acrylic acid alkyl ester (the following Formula (1)) having an alkyl group having 1 to 14 carbon atoms. Such a monomer unit is suitable for obtaining a large initial adhesive force. Further, in order to improve the adhesive force and the ability of electro-debonding of the obtained pressure-sensitive adhesive layer when no voltage is applied, the number of carbon atoms of an alkyl group $R^b$ in the following Formula (1) is preferably small, particularly preferably 8 or less, and more preferably 4 or less.

$$CH_2 = C(R^a)COOR^b \qquad (1)$$

[In Formula (1), $R^a$ represents a hydrogen atom or a methyl group, and $R^b$ represents an alkyl group having 1 to 14 carbon atoms.]

Examples of the (meth)acrylic acid alkyl ester having the alkyl group having 1 to 14 carbon atoms include methyl(meth)acrylate, ethyl(meth)acrylate, propyl(meth)acrylate, isopropyl(meth)acrylate, n-butyl(meth)acrylate, sec-butyl(meth)acrylate, 1,3-dimethyl butyl acrylate, pentyl(meth)acrylate, isopentyl(meth)acrylate, hexyl(meth)acrylate, 2-ethylbutyl(meth)acrylate, heptyl(meth)acrylate, n-octyl(meth)acrylate, isooctyl(meth)acrylate, 2-ethylhexyl(meth)acrylate, n-nonyl(meth)acrylate, isononyl(meth)acrylate, n-decyl(meth)acrylate, isodecyl(meth)acrylate, n-dodecyl(meth)acrylate, n-tridecyl(meth)acrylate, and n-tetradecyl(meth)acrylate. Among these, n-butyl acrylate, 2-ethylhexyl acrylate, and isononyl acrylate are preferable. The (meth)acrylic acid alkyl esters having the alkyl group having 1 to 14 carbon atoms may be used alone or in combination of two or more kinds thereof.

A proportion of the (meth)acrylic acid alkyl ester having the alkyl group having 1 to 14 carbon atoms to the total monomer components (100% by mass) constituting the acrylic polymer is not particularly limited, but is preferably 70% by mass or more, more preferably 80% by mass or more, and still more preferably 85% by mass or more. When the proportion of the acrylic polymer is 70% by mass or more, a large initial adhesive force is easily obtained.

The acrylic polymer preferably contains, in addition to the monomer unit derived from the (meth)acrylic acid alkyl ester having the alkyl group having 1 to 14 carbon atoms, a monomer unit derived from a polar group-containing monomer copolymerizable with the monomer unit derived from the (meth)acrylic acid alkyl ester for the purpose of modifying a cohesive force, heat resistance, a crosslinking property, and the like. The monomer unit can provide a crosslinking point, and is suitable for achieving the large initial adhesive force. Further, also from the viewpoint of improving the adhesive force and the ability of electro-debonding when no voltage is applied, the acrylic polymer preferably contains the monomer unit derived from the polar group-containing monomer.

Examples of the polar group-containing monomer include a carboxyl group-containing monomer, an alkoxy group-containing monomer, a hydroxyl group-containing monomer, a cyano group-containing monomer, a vinyl group-containing monomer, an aromatic vinyl monomer, an amide group-containing monomer, an imide group-containing monomer, an amino group-containing monomer, an epoxy group-containing monomer, a vinyl ether monomer, N-acryloylmorpholine, a sulfo group-containing monomer, a phosphoric acid group-containing monomer, and an acid anhydride group-containing monomer. Among these, a carboxyl group-containing monomer, an alkoxy group-containing monomer, a hydroxyl group-containing monomer, and an amide group-containing monomer are preferable, and the carboxyl group-containing monomer is particularly preferable, from the viewpoint of an excellent cohesive property. The carboxyl group-containing monomer is suitable for achieving a particularly large initial adhesive force. The polar group-containing monomers may be used alone or in combination of two or more kinds thereof.

Examples of the carboxyl group-containing monomer include acrylic acid, methacrylic acid, carboxyethyl(meth)acrylate, carboxypentyl(meth)acrylate, itaconic acid, maleic acid, fumaric acid, crotonic acid, and isocrotonic acid. In particular, acrylic acid is preferable. The carboxyl group-containing monomers may be used alone or in combination of two or more kinds thereof.

Examples of the alkoxy group-containing monomer include a methoxy group-containing monomer and an ethoxy group-containing monomer. Examples of the methoxy group-containing monomer include 2-methoxyethyl acrylate.

Examples of the hydroxyl group-containing monomer include 2-hydroxyethyl(meth)acrylate, 2-hydroxypropyl(meth)acrylate, 4-hydroxybutyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methyl(meth)acrylate, N-methylol(meth)acrylamide, vinyl alcohol, allyl alcohol, 2-hydroxyethyl vinyl ether, 4-hydroxybutyl vinyl ether, and diethylene glycol monovinyl ether. In particular, 2-hydroxyethyl(meth)acrylate and 4-hydroxybutyl(meth)acrylate are preferable. The hydroxyl group-containing monomers may be used alone or in combination of two or more kinds thereof.

Examples of the amide group-containing monomer include acrylamide, methacrylamide, N-vinylpyrrolidone, N,N-dimethylacrylamide, N,N-dimethyl methacrylamide, N,N-diethylacrylamide, N,N-diethyl methacrylamide, N,N'-methylene-bis-acrylamide, N,N-dimethylaminopropyl acrylamide, N,N-dimethylaminopropyl methacrylamide, and diacetone acrylamide. The amide group-containing monomers may be used alone or in combination of two or more kinds thereof.

Examples of the cyano group-containing monomer include acrylonitrile and methacrylonitrile.

Examples of the vinyl group-containing monomer include vinyl esters such as vinyl acetate, vinyl propionate, and vinyl laurate, and vinyl acetate is particularly preferable.

Examples of the aromatic vinyl monomer include styrene, chlorostyrene, chloromethylstyrene, α-methylstyrene, and other substituted styrenes.

Examples of the imide group-containing monomer include cyclohexyl maleimide, isopropyl maleimide, N-cyclohexyl maleimide, and itaconimide.

Examples of the amino group-containing monomer include aminoethyl(meth)acrylate, N,N-dimethylaminoethyl(meth)acrylate, and N,N-dimethylaminopropyl(meth)acrylate.

Examples of the epoxy group-containing monomer include glycidyl(meth)acrylate, methylglycidyl(meth)acrylate, and allyl glycidyl ether.

Examples of the vinyl ether monomer include methyl vinyl ether, ethyl vinyl ether, and isobutyl vinyl ether.

A proportion of the polar group-containing monomer to the total monomer components (100% by mass) constituting the acrylic polymer is preferably 0.1 % by mass or more and 35% by mass or less. An upper limit of the proportion of the polar group-containing monomer is more preferably 25% by mass, and still more preferably 20% by mass, and a lower limit thereof is more preferably 0.5% by mass, still more preferably 1% by mass, and particularly preferably 2% by mass. When the proportion of the polar group-containing monomer is 0.1% by mass or more, the cohesive force is easily obtained. Thus, an adhesive residue is less likely to occur on a surface of an adherend after the pressure-sensitive adhesive layer is debonded, and the ability of electro-debonding is improved. When the proportion of the polar group-containing monomer is 35% by mass or less, it is easy to prevent the pressure-sensitive adhesive layer from excessively adhering to the adherend to cause heavy effort required to separate. In particular, when the proportion of the polar group-containing monomer is 2% by mass or more and 20% by mass or less, both the detachability to the adherend and adhesion between the pressure-sensitive adhesive layer and another layer can be easily achieved in a balanced manner.

As the monomer component constituting the acrylic polymer, a polyfunctional monomer may be contained in order to introduce a crosslinked structure into the acrylic polymer to easily obtain a necessary cohesive force.

Examples of the polyfunctional monomer include ethylene glycol di(meth)acrylate, diethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinyl benzene, and N,N'-methylene-bis-acrylamide. The polyfunctional monomers may be used alone or in combination of two or more thereof.

A content of the polyfunctional monomer with respect to the total monomer components (100% by mass) constituting the acrylic polymer is preferably 0.1% by mass or more and 15% by mass or less. An upper limit of the content of the polyfunctional monomer is more preferably 10% by mass, and a lower limit thereof is more preferably 3% by mass. When the content of the polyfunctional monomer is 0.1% by mass or more, flexibility and adhesiveness of the pressure-sensitive adhesive layer are easily improved, which is preferable. When the content of the polyfunctional monomer is 15% by mass or less, the cohesive force does not become too high, and appropriate adhesiveness is easily obtained.

The polyester-based polymer is typically a polymer having a structure in which a poly carboxy lie acid such as a dicarboxylic acid or a derivative thereof (hereinafter, also referred to as a "polycarboxylic acid monomer") and polyhydric alcohol such as a diol or a derivative thereof (hereinafter, referred to as a "polyhydric alcohol monomer") are condensed.

The polycarboxylic acid monomer is not particularly limited, but examples thereof include adipic acid, azelaic acid, dimer acid, sebacic acid, 1,4-cyclohexanedicarboxylic acid, 1,3-cyclohexanedicarboxylic acid, 1,2-cyclohexanedicarboxylic acid, 4-methyl-1,2-cyclohexanedicarboxylic acid, dodecenyl succinic anhydride, fumaric acid, succinic acid, dodecanedioic acid, hexahydrophthalic anhydride, tetrahydrophthalic anhydride, maleic acid, maleic anhydride, itaconic acid, citraconic acid, and derivatives thereof.

The polycarboxylic acid monomers may be used alone or in combination of two or more kinds thereof.

The polyhydric alcohol monomer is not particularly limited, but examples thereof include ethylene glycol, 1,2-propylene glycol, 1,3-propanediol, 2-methyl-1,3-propanediol, 1,2-butanediol, 1,3-butanediol, 1,4-butanediol, 1,5-pentanedione, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, 1,10-decanediol, and derivatives thereof.

The polyhydric alcohol monomers may be used alone or in combination of two or more kinds thereof.

The first polymer according to the embodiment of the present invention may contain an ionic polymer. The ionic polymer is a polymer having an ionic functional group. When the first polymer contains the ionic polymer, the ability of electro-debonding is improved. When the first polymer contains the ionic polymer, a content of the ionic polymer is preferably 0.05 parts by mass or more and 2 parts by mass or less with respect to 100 parts by mass of the first polymer.

In the embodiment of the present invention, the first polymer can be obtained by (co)polymerizing the monomer components. A polymerization method is not limited, but examples thereof include solution polymerization, emulsion polymerization, bulk polymerization, suspension polymerization, and photopolymerization (active energy ray polymerization) methods. In particular, the solution polymerization method is preferable from the viewpoint of cost and productivity. When the first polymer is obtained by the copolymerizing, the polymer may be any of a random copolymer, a block copolymer, an alternating copolymer, a graft copolymer, and the like.

The solution polymerization method is not particularly limited, but examples thereof include a method in which monomer components, a polymerization initiator, and the like are dissolved in a solvent and polymerized by heating to obtain a polymer solution containing a first polymer.

As the solvent used in the solution polymerization method, various general solvents can be used. Examples of such a solvent (polymerization solvent) include organic solvents such as aromatic hydrocarbons such as toluene, benzene, and xylene; esters such as ethyl acetate and n-butyl acetate; aliphatic hydrocarbons such as n-hexane and n-heptane; alicyclic hydrocarbons such as cyclohexane and methylcyclohexane; and ketones such as methyl ethyl ketone and methyl isobutyl ketone. The solvents may be used alone or in combination of two or more kinds thereof.

An amount of the solvent to be used is not particularly limited, but is preferably 10 parts by mass or more and 1,000 parts by mass or less with respect to the total monomer components (100 parts by mass) constituting the first polymer. An upper limit of the amount of the solvent to be used is more preferably 500 parts by mass, and a lower limit thereof is more preferably 50 parts by mass.

The polymerization initiator to be used in the solution polymerization method is not particularly limited, and examples thereof include a peroxide-based polymerization initiator and an azo-based polymerization initiator. The peroxide-based polymerization initiator is not particularly limited, but examples thereof include peroxycarbonate, ketone peroxide, peroxyketal, hydroperoxide, dialkyl peroxide, diacyl peroxide, and peroxyester, and specific examples thereof include benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy) cyclododecane. The azo-based polymerization initiator is not limited, but examples thereof include 2,2'-azobisisobutyronitrile, 2,2'-azobis-2-methylbutyronitrile, 2,2'-azobis(2,4-dimethylvaleronitrile), dimethyl 2,2'-azobis(2-methylpropionate), 2,2'-azobis(4-methoxy-2,4-dimethylvaleronitrile), 1,1'-azobis(cyclohexane-1-carbonitrile), 2,2'-azobis(2,4,4-trimethylpentane), 4,4'-azobis-4-cyanovaleric acid, 2,2'-azobis(2-amidinopropane)dihydrochloride, 2,2'-azobis [2-(5-methyl-2-imidazoline-2-yl)propane]dihydrochloride, 2,2'-azobis(2-methylpropionamidine) disulfate, 2,2'-azobis(N,N'-dimethylene isobutyramidine)hydrochloride, and 2,2'-azobis[N-(2-carboxyethyl)-2-methylpropionamidine]hydrate. The polymerization initiators may be used alone or in combination of two or more kinds thereof.

An amount of the polymerization initiator to be used is not particularly limited, but is preferably 0.01 parts by mass or more and 5 parts by mass or less with respect to the total monomer components (100 parts by mass) constituting the first polymer. An upper limit of the amount of the polymerization initiator to be used is more preferably 3 parts by mass, and a lower limit thereof is more preferably 0.05 parts by mass.

In the solution polymerization method, a heating temperature when being heated and polymerized is not particularly limited, but is, for example, 50°C or higher and 80°C or lower. A heating time is not particularly limited, but is, for example, 1 hour or longer and 24 hours or shorter.

A weight average molecular weight of the first polymer is not particularly limited, but is preferably 100,000 or more and 5,000,000 or less. An upper limit of the weight average molecular weight is more preferably 4,000,000, and still more preferably 3,000,000, and a lower limit thereof is more preferably 200,000, and still more preferably 300,000. When the weight average molecular weight is 100,000 or more, it is possible to effectively prevent a problem that the cohesive force becomes small and the adhesive residue occurs on the surface of the adherend after the pressure-sensitive adhesive layer is debonded. When the weight average molecular weight is 5,000,000 or less, it is possible to effectively prevent a problem that wettability of the surface of the adherend becomes insufficient after the pressure-sensitive adhesive layer is debonded.

The weight average molecular weight is obtained by a gel permeation chromatography (GPC) method, and more specifically, the weight average molecular weight can be measured under the following conditions using, for example, "HLC-8220GPC" (trade name, manufactured by Tosoh Corporation) as a GPC measuring device, and can be calculated based on a standard polystyrene equivalent.

(Conditions for Measuring Weight Average Molecular Weight)

- Sample concentration: 0.2% by mass (tetrahydrofuran solution)
- Sample injection amount: 10 μL
- Sample column: TSK guard column Super HZ-H (one column) + TSK gel Super HZM-H (two columns)
- Reference column: TSK gel Super H-RC (one column)
- Eluent: tetrahydrofuran (THF)
- Flow rate: 0.6 mL/min

- Detector: differential refractometer (RI)
- Column temperature (measurement temperature): 40°C

A glass transition temperature (Tg) of the first polymer is not particularly limited, but is preferably 0°C or lower since a decrease in initial adhesive force can be reduced, more preferably -10°C or lower, and still more preferably -20°C or lower. When the glass transition temperature is -40°C or lower, the rate of decrease in adhesive force due to voltage application becomes particularly large, which is particularly preferable, and the glass transition temperature is most preferably -50°C or lower.

The composition of the monomer components can be set so that the glass transition temperature (hereinafter, also referred to as a " glass transition temperature of a polymerized product") determined by a Fox formula based on the composition of the monomer components is -75°C or higher and -10°C or lower. In some aspects, the glass transition temperature (Tg) of the polymerized product (for example, an acrylic polymerized product, typically an acrylic polymer) is suitably -15°C or lower, preferably -20°C or lower, more preferably -25°C or lower, and still more preferably -30°C or lower, and may be -40°C or lower (for example, -55°C or lower). When Tg of the polymerized product is low, adhesion of the pressure-sensitive adhesive layer to a substrate layer and adhesiveness to the adherend generally tend to improve.

As shown below, the Fox formula is a relational expression between Tg of a copolymer and a glass transition temperature Tgi of a homopolymer obtained by homopolymerizing each monomer constituting the copolymer.

$$1/Tg = \Sigma\,(Wi/Tgi)$$

In the Fox formula, Tg represents a glass transition temperature (unit: K) of the copolymer, Wi represents a weight fraction (copolymerization ratio on a weight basis) of a monomer i in the copolymer, and Tgi represents a glass transition temperature (unit: K) of the homopolymer of the monomer i.

As the glass transition temperature of the homopolymer used for calculation of Tg, the values described in known materials are used. For example, for the following monomers, the following values are used as the glass transition temperature of the homopolymer of the monomer.

N-butyl acrylate -55°C
Methyl methacrylate: 105°C
Methyl acrylate 8°C
Cyclohexyl methacrylate: 66°C
N-vinyl-2-pyrrolidone 54°C
4-hydroxybutyl acrylate -40°C
Isobornyl methacrylate 180°C
Acrylic acid 106°C
Acryloyl morpholine (ACMO) 145°C

As for the glass transition temperatures of homopolymers of monomers other than those exemplified above, numerical values described in "Polymer Handbook" (Third Edition, John Wiley &Sons, Inc., 1989) are used. In a case where plural kinds of values are described in the document, the highest value is adopted.

As for a monomer in which the glass transition temperature of the homopolymer is not described in the Polymer Handbook, values obtained by the following measurement method are used (see JP2007-51271A). Specifically, 100 parts by weight of the monomer, 0.2 parts by weight of azobisisobutyronitrile and 200 parts by weight of ethyl acetate as a polymerization solvent are put into a reactor including a thermometer, a stirrer, a nitrogen introduction pipe, and a reflux condenser, and the mixture thereof is stirred for 1 hour while circulating nitrogen gas. After oxygen in a polymerization system is removed in this manner, the temperature is raised to 63°C and the reaction is performed for 10 hours. Next, the mixture is cooled to room temperature to obtain a homopolymer solution having a solid content concentration of 33% by mass. Next, the homopolymer solution is cast and coated on a release liner and the coated release liner is dried to prepare a test sample (sheet-like homopolymer) having a thickness of about 2 mm. The test sample is punched out into a disk shape having a diameter of 7.9 mm, sandwiched between parallel plates, and subjected to measurement of viscoelasticity in a shear mode at a heating rate of 5°C/min in a temperature range of -70°C to 150°C while applying a shear strain of a frequency of 1 Hz using a viscoelasticity tester (ARES, manufactured by Rheometrics), and a peak top temperature of tan $\delta$ is defined as Tg of the homopolymer.

A content of the first polymer in the pressure-sensitive adhesive composition according to the embodiment of the present invention is preferably 50% by mass or more and 99.9% by mass or less with respect to the total amount (100% by mass) of the pressure-sensitive adhesive composition, an upper limit thereof is more preferably 99.5% by mass, and still more preferably 99% by mass, and a lower limit thereof is more preferably 60% by mass, and still more

preferably 70% by mass.

(Second Polymer)

The pressure-sensitive adhesive composition according to the embodiment of the present invention further contains a second polymer having a glass transition temperature (Tg) of 40°C to 180°C.

In the pressure-sensitive adhesive composition according to the embodiment of the present invention, the second polymer needs to have a glass transition temperature (Tg) of 40°C to 180°C. The second polymer may be different from the first polymer.

Since the pressure-sensitive adhesive composition according to the embodiment of the present invention includes the second polymer having a glass transition temperature (Tg) of 40°C to 180°C, an effect of improving an elastic modulus can be obtained, and a pressure-sensitive adhesive layer having excellent moisture and heat stability can be formed, which exhibits an excellent adhesive force when no voltage is applied and has an adhesive force sufficiently reduced when a voltage is applied even after storage in a high-temperature and high-humidity environment.

The glass transition temperature (Tg) of the second polymer is preferably 40°C or more, more preferably 50°C or more, still more preferably 60°C or more, and particularly preferably 70°C or more, from the viewpoint of adhesive properties. From the viewpoint of adhesive properties, the glass transition temperature (Tg) of the second polymer is necessarily 180°C or lower, more preferably 160°C or lower, still more preferably 140°C or lower, yet still more preferably 120°C or lower, and particularly preferably 100°C or lower.

The glass transition temperature (Tg) of the second polymer can be calculated by the same method as that for the glass transition temperature (Tg) of the first polymer.

In addition, the glass transition temperature (Tg) of the second polymer can be adjusted according to the type, the blending amount, and the like of the monomers constituting the second polymer.

In the embodiment of the present invention, the second polymer is not particularly limited as long as Tg satisfies the specific range, a general organic polymer compound can be used, and examples thereof include a polymerized product or a partially polymerized product of monomers. The monomers may be one kind of monomer and also be a monomer mixture of two or more kinds of monomers. The partially polymerized product means a polymerized product in which one or more components of the monomer or the monomer mixture are partially polymerized.

In addition, the second polymer may have adhesiveness or may be a tackifying resin. The second polymer preferably contains a tackifying resin, and more preferably further contains a tackifying resin in addition to the organic polymer compound. When the second polymer contains the tackifying resin, it is possible to form a pressure-sensitive adhesive layer in which a rate of decrease in adhesive force due to voltage application after storage in a high-temperature and high-humidity environment is further increased, which is preferable.

Examples of the organic polymer compound contained in the second polymer include an acrylic polymer, a rubber-based polymer, a vinyl alkyl ether-based polymer, a silicone-based polymer, a polyester-based polymer, a polyamide-based polymer, a urethane-based polymer, a fluorine-based polymer, and an epoxy-based polymer.

In the present specification, the organic polymer compound in the second polymer refers to a compound which is a polymerized product or a partially polymerized product of monomers, and refers to a component different from the tackifying resin and the first polymer

Examples of the tackifying resin include a rosin-based tackifying resin such as a rosin resin, a rosin phenolic resin, and a rosin ester resin; a hydrogenated rosin-based tackifying resin obtained by hydrogenating these rosin-based resins; a terpene-based tackifying resin such as a terpene-based resin, a terpene phenol-based resin, and an aromatic modified terpene-based resin; a hydrogenated terpene-based tackifying resin obtained by hydrogenating these terpene-based resins; a C5-based petroleum resin obtained by copolymerizing C5 fractions such as pentene, isoprene, piperine, and 1,3 -pentadiene produced by thermal decomposition of petroleum naphtha and a hydrogenated petroleum tackifying resin of the C5-based petroleum resin; a C9-based petroleum resin obtained by copolymerizing C9 fractions such as indene, vinyl toluene, α-methylstyrene, and β-methylstyrene produced by thermal decomposition of petroleum naphtha and a hydrogenated petroleum tackifying resin of the C9-based petroleum resin; a phenol-based tackifying resin; and a hydrocarbon-based tackifying resin.

Examples of the phenol-based tackifying resin include a terpene phenolic resin, a hydrogenated terpene phenolic resin, an alkylphenol resin, a rosin phenolic resin, and a xylene formaldehyde resin.

The terpene phenolic resin refers to a polymer containing a terpene residue and a phenol residue, and is a concept including both a copolymer of terpenes and a phenol compound (terpene-phenol copolymer resin) and a homopolymer of terpenes or a copolymer modified with phenol (phenol-modified terpene resin). Examples of the terpenes constituting such a terpene phenolic resin include monoterpenes such as α-pinene, β-pinene, and limonene (including d-isomer, l-isomer, and d/l-isomer (dipentene)).

The hydrogenated terpene phenolic resin refers to a hydrogenated terpene phenolic resin having a hydrogenated structure of such a terpene phenolic resin, and may be referred to as a hydrogenated terpene phenolic resin.

The alkylphenol resin is a resin (oil-based phenolic resin) obtained from alkylphenol and formaldehyde. Examples of the alkylphenol resin include a novolac type and a resol type.

Examples of the rosin phenolic resin include phenol-modified products of rosins and various rosin derivatives (including rosin esters, unsaturated fatty acid-modified rosins, and unsaturated fatty acid-modified rosin esters). Examples of the rosin phenolic resin include a rosin phenolic resin obtained by a method in which phenol is added to rosins or various rosin derivatives with an acid catalyst and thermally polymerized.

Examples of the terpene-based tackifying resin include a terpene resin, a terpene phenolic resin, a styrene-modified terpene resin, an aromatic modified terpene resin, and a hydrogenated terpene resin.

Examples of the terpene resin include a polymer of terpenes (typically monoterpenes) such as $\alpha$-pinene, $\beta$-pinene, d-limonene, l-limonene, and dipentene. Examples of the homopolymer of one kind of terpene include an $\alpha$-pinene polymer, a $\beta$-pinene polymer, and a dipentene polymer.

The concept of the rosin-based tackifying resin includes both rosins and rosin derivative resins.

Examples of the rosins include unmodified rosins (raw rosins) such as a gum rosin, a wood rosin, and a tall oil rosin; and modified rosins (hydrogenated rosins, disproportionated rosins, polymerized rosins, and other chemically modified rosins) obtained by modifying the unmodified rosins by hydrogenation, disproportionation, polymerization, or the like.

Examples of the rosin derivative resin include rosin esters such as an unmodified rosin ester which is an ester of an unmodified rosin and an alcohol and a modified rosin ester which is an ester of a modified rosin and an alcohol; unsaturated fatty acid-modified rosins obtained by modifying rosins with an unsaturated fatty acid; unsaturated fatty acid-modified rosin esters obtained by modifying rosin esters with an unsaturated fatty acid; rosin alcohols obtained by reducing carboxy groups of rosins or rosin derivative resins (rosin esters, unsaturated fatty acid-modified rosins, unsaturated fatty acid-modified rosin esters, and the like); rosin phenols; and metal salts thereof.

Examples of the rosin esters include a methyl ester of an unmodified rosin or a modified rosin (a hydrogenated rosin, a disproportionated rosin, a polymerized rosin, or the like), a triethylene glycol ester, a glycerin ester, a pentaerythritol ester, and a maleic acid ester.

Examples of the hydrocarbon-based tackifying resin include an aliphatic hydrocarbon resin, an aromatic hydrocarbon resin (for example, a styrene-based resin, a xylene-based resin, or the like), an aliphatic cyclic hydrocarbon resin, an aliphatic/aromatic petroleum resin (a styrene-olefin-based copolymer or the like), an aliphatic/alicyclic petroleum resin, a hydrogenated hydrocarbon resin, a coumarone resin, and a coumarone-indene resin.

Among these, the terpene-based tackifying resin or the rosin-based tackifying resin is preferable. The tackifying resins may be used alone or in combination of two or more kinds thereof.

A softening point of the tackifying resin is preferably 100°C or higher, more preferably 110°C or higher, still more preferably 120°C or higher, and most preferably 130°C or higher. When the softening point is 100°C or higher, the cohesive force of the resin can be improved, and as a result, the adhesive force when no voltage is applied, that is, the initial adhesive force can be further improved. An upper limit of the softening point of the tackifying resin is preferably 200°C or lower, more preferably 180°C or lower, still more preferably 160°C or lower, and most preferably 140°C or lower.

A content of the tackifying resin in the pressure-sensitive adhesive composition according to the embodiment of the present invention is preferably 1 to 50 parts by mass, more preferably 1 to 30 parts by mass, still more preferably 1 to 20 parts by mass, and most preferably 1 to 15 parts by mass with respect to 100 parts by mass of the first polymer. By setting the content of the tackifying resin to 1 part by mass or more with respect to 100 parts by mass of the first polymer, an effect of adding a tackifier, that is, an effect of achieving both the initial adhesive force and the ability of electro-debonding is easily obtained. In addition, by setting the content of the tackifying resin to 50 parts by mass or less based on 100 parts by mass of the first polymer, dispersibility of the tackifier in the resin can be maintained, and initial adhesive strength is easily obtained.

Among these, the acrylic polymer and the polyester-based polymer are preferably used from the viewpoint of adhesive properties.

In the embodiment of the present invention, the acrylic polymer used as the organic polymer compound in the second polymer may be a commercially available product, or may be obtained by polymerizing an acrylic monomer component.

Examples of the commercially available product of the acrylic polymer used as the organic polymer compound in the second polymer include ARUFON UH2170 and UC3000 (manufactured by TOAGOSEI CO., LTD.).

Any acrylic monomer can be used as the acrylic monomer component, and examples thereof include a hydroxyl group-containing acrylic monomer and a polymerizable acrylic monomer.

The acrylic monomer component constituting the organic polymer compound in the second polymer preferably contains a polymerizable acrylic monomer. The number of kinds of polymerizable acrylic monomers contained in the acrylic monomer component may be only one, or may be two or more.

Examples of a polymerizable monomer include acrylic acid (AA), N-vinyl-2-pyrrolidone, dicyclopentanyl methacrylate, methyl acrylate (MA), methyl methacrylate (MMA), cyclohexyl acrylate, cyclohexyl methacrylate (CHMA), isobornyl acrylate (IBXMA), β-carboxyethyl acrylate, 2-hydroxy-3-phenoxypropyl acrylate, acrylonitrile, acrylamide, dimethylacrylamide, isopropylacrylamide, hydroxyethylacrylamide, hydroxymethylacrylamide, hydroxybutylacrylamide, acryloyl morpholine (ACMO), and 1-vinylimidazole. From the viewpoint that the effects of the present invention can be further exhibited, the polymerizable monomer is preferably at least one selected from acrylic acid, methyl acrylate (MA), methyl methacrylate (MMA), cyclohexyl acrylate, cyclohexyl methacrylate (CHMA), isobornyl acrylate (IBXMA), and acryloyl morpholine (ACMO), and more preferably at least one selected from acrylic acid (AA), cyclohexyl acrylate, cyclohexyl methacrylate (CHMA), and isobornyl acrylate (IBXMA).

A content of the polymerizable monomer in the acrylic monomer component is preferably 1% by mass or more, more preferably 10% by mass or more, still more preferably 30% by mass or more, yet still more preferably 50% by mass or more, and particularly preferably 80% by mass or more, from the viewpoint of adhesive properties.

Specific examples of a hydroxyl group-containing monomer include hydroxy alkyl (meth)acrylate such as 2-hydroxybutyl (meth)acrylate, 3-hydroxypropyl (meth)acrylate, 4-hydroxybutyl acrylate (4HBA), 4-hydroxybutyl methacrylate, 6-hydroxyhexyl (meth)acrylate, 8-hydroxyoctyl (meth)acrylate, 10-hydroxydecyl (meth)acrylate, and 12-hydroxy lauryl (meth)acrylate; hydroxy alkylcycloalkane (meth)acrylate such as (4-hydroxymethylcyclohexyl)methyl (meth)acrylate; and other hydroxyl group-containing monomers such as hydroxyethyl (meth)acrylamide, allyl alcohol, 2-hydroxyethyl vinyl ether, 4-hydroxybutyl vinyl ether, and diethylene glycol monovinyl ether.

Among these, from the viewpoint of handling property and the viewpoint of further exhibiting the effects of the present invention, the hydroxyl group-containing monomer is preferably hydroxyalkyl (meth)acrylate, and more preferably hydroxyalkyl (meth)acrylate having a hydroxyalkyl group having 2 to 6 carbon atoms. Specifically, the hydroxyl group-containing monomer is preferably at least one selected from 2-hydroxyethyl (meth)acrylate and 4-hydroxybutyl (meth)acrylate, and more preferably 4-hydroxybutyl acrylate (4HBA).

A content of the hydroxyl group-containing monomer in the acrylic monomer component is preferably 1% by mass or more, more preferably 3% by mass or more, still more preferably 5% by mass or more, yet still more preferably 10% by mass or more, and particularly preferably 15% by mass or more, from the viewpoint of adhesive properties. From the viewpoint of adhesive properties, the content is preferably 30% by mass or less, more preferably 25% by mass or less, and still more preferably 20% by mass or less.

The organic polymer compound contained in the second polymer according to the embodiment of the present invention can be produced by any appropriate polymerization as long as the effects of the present invention are not impaired.

Examples of a method for polymerizing the organic polymer compound in the second polymer according to the embodiment of the present invention include a solution polymerization method, an emulsion polymerization method, a bulk polymerization method, and a polymerization method (active energy ray polymerization method) using active energy ray irradiation. Among these, the bulk polymerization method and the solution polymerization method are preferable, and the solution polymerization method is more preferable.

Examples of a solvent that can be used in the polymerization include organic solvents such as esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. The solvents may be used alone or in combination of two or more kinds thereof.

In the polymerization, any appropriate polymerization initiator (for example, a thermal polymerization initiator or a photopolymerization initiator) may be adopted as long as the effects of the present invention are not impaired. The polymerization initiators may be used alone or in combination of two or more kinds thereof. When solution polymerization is performed, an oil-soluble polymerization initiator is preferably used.

Any appropriate thermal polymerization initiator may be adopted as the thermal polymerization initiator as long as the effects of the present invention are not impaired. The thermal polymerization initiators may be used alone or in combination of two or more kinds thereof. Examples of the thermal polymerization initiator include an azo-based initiator such as 2,2'-azobisisobutyronitrile (AIBN), 2,2'-azobis-2-methylbutyronitrile (AMBN), dimethyl 2,2'-azobis(2-methylpropionate), 4,4'-azobis-4-cyanovaleric acid, 2,2'-azobis(4-methoxy-2,4-dimethylvaleronitrile), 2,2'-azobis(2,4-dimethylvaleronitrile), 1,1'-azobis(cyclohexane-1-carbonitrile), and 2,2'-azobis(2,4,4-trimethylpentane); and a peroxide-based initiator such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane.

An amount of the thermal polymerization initiator to be used is, for example, preferably 0.1 parts by mass to 15 parts by mass with respect to 100 parts by mass of all monomers (monomer composition) that can be used for constituting the organic polymer compound in the second polymer.

Any appropriate photopolymerization initiator may be adopted as the photopolymerization initiator as long as the effects of the present invention are not impaired. The photopolymerization initiators may be used alone or in combination of two or more kinds thereof. Examples of the photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a thioxanthone-based photopolymerization initiator, and an acylphosphine oxide-based photopolymerization initiator.

An amount of the photopolymerization initiator to be used is, for example, preferably 0.001 parts by mass to 0.5 parts by mass with respect to 100 parts by mass of all monomers (monomer composition) that can be used for constituting the organic polymer compound in the second polymer

In the polymerization of the organic polymer compound in the second polymer, a chain transfer agent may be used to adjust a molecular weight. Examples of the chain transfer agent include 2-mercaptoethanol, α-thioglycerol, 2,3-dimercapto-1-propanol, octyl mercaptan, t-nonyl mercaptan, dodecyl mercaptan (lauryl mercaptan), t-dodecyl mercaptan, glycidyl mercaptan, thioglycolic acid, methyl thioglycolate, ethyl thioglycolate, propyl thioglycolate, butyl thioglycolate, t-butyl thioglycolate, 2-ethylhexyl thioglycolate, octyl thioglycolate, isooctyl thioglycolate, decyl thioglycolate, dodecyl thioglycolate, thioglycolic acid ester of ethylene glycol, thioglycolic acid ester of neopentyl glycol, thioglycolic acid ester of pentaerythritol, and α-methylstyrene dimer. Among these, 2-mercaptoethanol and methyl thioglycolate are preferable, and 2-mercaptoethanol is particularly preferable, from the viewpoint of preventing whitening of a double-sided pressure-sensitive adhesive tape of the present invention. The chain transfer agents may be used alone or in combination of two or more kinds thereof.

An amount of the chain transfer agent to be used is, for example, preferably 0.1 parts by mass to 20 parts by mass, more preferably 0.2 parts by mass to 15 parts by mass, and still more preferably 0.3 parts by mass to 10 parts by mass with respect to 100 parts by mass of all monomers (monomer composition) that can be used for constituting the organic polymer compound in the second polymer.

A weight average molecular weight of the organic polymer compound in the second polymer is not particularly limited, but is preferably 500 or more and 1,000,000 or less. An upper limit of the weight average molecular weight is more preferably 800,000, still more preferably 600,000, still more preferably 400,000, still more preferably 200,000, yet still more preferably 100,000, and even still more preferably 10,000, and a lower limit thereof is more preferably 1000, still more preferably 2000, yet still more preferably 3000, and even still more preferably 4000. When the weight average molecular weight is 500 or more, it is possible to effectively prevent a problem that an adherend surface is contaminated after the pressure-sensitive adhesive layer is debonded due to surface segregation. In addition, when the weight average molecular weight is 1,000,000 or less, it is possible to effectively prevent a problem that the cohesive force of the pressure-sensitive adhesive layer decreases, resulting in the adhesive residue occurring on the adherend after the pressure-sensitive adhesive layer is debonded.

The second polymers may be used alone or in combination of two or more kinds thereof.

In the pressure-sensitive adhesive composition according to the embodiment of the present invention, a content of the organic polymer compound in the second polymer is preferably 1 part by mass or more, more preferably 5 parts by mass or more, still more preferably 10 parts by mass or more, still more preferably 15 parts by mass or more, still more preferably 20 parts by mass or more, yet still more preferably 25 parts by mass or more, and even still more preferably 30 parts by mass or more with respect to 100 parts by mass of the first polymer or 100 parts by mass of a monomer mixture as a raw material of the first polymer from the viewpoint of adhesive properties. From the viewpoint of adhesive properties, the content is preferably 80 parts by mass or less, more preferably 70 parts by mass or less, still more preferably 60 parts by mass or less, and yet still more preferably 50 parts by mass or less.

The content of the organic polymer compound in the second polymer may be 1 to 50 parts by mass with respect to 100 parts by mass of the first polymer.

These second polymers may be added after the first polymer is obtained, or may be blended with a monomer mixture as a raw material of the first polymer before the first polymer is obtained and subjected to a polymerization reaction. However, the first polymer and the second polymer are preferably blended after each undergoing a polymerization reaction.

In the pressure-sensitive adhesive composition according to the embodiment of the present invention, a difference in HSP value between the first polymer and the second polymer is preferably 0 to 3, and a difference in HSP value between the organic polymer compounds in the first polymer and the second polymer is more preferably 0 to 3.

The difference in HSP value (ΔHSP value) between the first polymer and the second polymer is a difference between an HSP value of the first polymer and an HSP value of the second polymer.

When the difference in HSP value is small, the compatibility between the first polymer and the second polymer tends to be good. When the difference in HSP value is large, the compatibility between the first polymer and the second polymer tends to deteriorate. From the viewpoint of compatibility, the difference in HSP value between the first polymer and the second polymer is preferably 3 or less, more preferably 2.5 or less, and still more preferably 2 or less.

Here, a Hansen solubility parameter (HSP value) represents a physical property value of a certain substance by a dispersion term (δD) which is energy derived from a dispersion force between molecules, a polarization term (δP) which is energy derived from a polar force between molecules, and a hydrogen bond term (δH) which is energy derived

from a hydrogen bond force between molecules, and it is known that substances having similar HSP values exhibit physical properties close to each other.

The HSP value may be a known value, or may be calculated by using personal computer software HSPiP (source: http://www.hansen-solubility.com/index.html).

In the pressure-sensitive adhesive composition according to the embodiment of the present invention, the difference in HSP value between the first polymer and the second polymer can be adjusted according to the type, the blending amount, and the like of the first polymer and the second polymer to be used.

(Ionic Liquid)

The ionic liquid in the embodiment of the present invention is not limited as long as the ionic liquid is a molten salt (room temperature molten salt) which is a liquid at 25°C and composed of a pair of anion and cation. Examples of the anion and the cation are given below, and among ionic materials obtained by combining these, matters that are liquid at 25°C are the ionic liquids, and matters that are solid at 25°C are not the ionic liquids but ionic solids to be described below.

Examples of the anion of the ionic liquid include $(FSO_2)_2N^-$, $(CF_3SO2)_2N^-$, $(CF_3CF_2SO2)_2N^-$, $(CF_3SO_2)_3C^-$, Br, $AlCl_4^-$, $Al_2Cl_7^-$, $NO_3^-$, $BF_4^-$, $PF_6^-$, $CH_3COO^-$, $CF_3COO^-$, $CF_3CF_2CF_2COO^-$, $CF_3SO_3^-$, $CF_3(CF_2)_3SO_3^-$, $AsF_6^-$, $SbF_6^-$, and $F(HF)_n^-$. Among these, as the anion, an anion of a sulfonylimide compound such as a $(FSO_2)_2N^-$ [bis(fluorosulfonyl)imide anion] and a $(CF_3SO_2)_2N^-$[bis(trifluoromethanesulfonyl)imide anion] is preferable because the anion of the sulfonylimide compound is chemically stable and is suitable for improving the ability of electro-debonding. That is, the anion of the ionic liquid is preferably at least one selected from the group consisting of a bis(fluorosulfonyl)imide anion and/or a bis(trifluoromethanesulfonyl)imide anion.

The cation in the ionic liquid is preferably a nitrogen-containing onium cation, a sulfur-containing onium cation, and a phosphorus-containing onium cation because these cations are chemically stable and are suitable for improving the ability of electro-debonding, and more preferably an imidazolium cation, an ammonium cation, a pyrrolidinium cation, and a pyridinium cation.

Examples of the imidazolium cation include a 1-methylimidazolium cation, a 1-ethyl-3-methylimidazolium cation, 1-propyl-3-methylimidazolium cation, 1-butyl-3-methylimidazolium cation, 1-pentyl-3-methylimidazolium cation, 1-hexyl-3-methylimidazolium cation, 1-heptyl-3-methylimidazolium cation, 1-octyl-3-methylimidazolium cation, I-nonyl-3-methylimidazolium cation, 1-undecyl-3-methylimidazolium cation, 1-dodecyl-3-methylimidazolium cation, 1-tridecyl-3-methylimidazolium cation, 1-tetradecyl-3-methylimidazolium cation, 1-pentadecyl-3-methylimidazolium cation, 1-hexadecyl-3-methylimidazolium cation, 1-heptadecyl-3-methylimidazolium cation, 1-octadecyl-3-methylimidazolium cation, 1-undecyl-3-methylimidazolium cation, 1-benzyl-3-methylimidazolium cation, 1-butyl-2,3-dimethylimidazolium cation, and 1,3-bis(dodecyl)imidazolium cation.

Examples of the pyridinium cation include a 1-butylpyridinium cation, a 1-hexylpyridinium cation, a 1-butyl-3-methylpyridinium cation, a 1-butyl-4-methylpyridinium cation, and a 1-octyl-4-methylpyridinium cation.

Examples of the pyrrolidinium cation include a 1-ethyl-1-methylpyrrolidinium cation and a 1-butyl-1-methylpyrrolidinium cation.

Examples of the ammonium cation include a tetraethylammonium cation, a tetrabutylammonium cation, a methyltrioctylammonium cation, a tetradecyltrihexylammonium cation, a glycidyltrimethylammonium cation, and a trimethylaminoethyl acrylate cation.

As the ionic liquid, from the viewpoint of increasing the rate of decrease in adhesive force when the voltage is applied, it is preferable to select a cation having a molecular weight of 160 or less as the cation of the ionic liquid, and an ionic liquid containing the $(FSO_2)_2N^-$[bis(fluorosulfonyl)imide anion] or the $(CF_3SO_2)_2N^-$ [bis(trifluoromethanesulfonyl)imide anion] and a cation having the molecular weight of 160 or less is particularly preferable. Examples of the cation having the molecular weight of 160 or less include a 1 -methylimidazolium cation, a 1-ethyl-3-methylimidazolium cation, a 1-propyl-3-methylimidazolium cation, a 1-butyl-3-methylimidazolium cation, a 1-pentyl-3-methylimidazolium cation, a 1-butylpyridinium cation, a 1-hexylpyridinium cation, a 1-butyl-3-methylpyridinium cation, a 1-butyl-4-methylpyridinium cation, a 1 -ethyl-1 -methylpyrrolidinium cation, a 1 -butyl-1-methylpyrrolidinium cation, a tetraethylammonium cation, a glycidyltrimethylammonium cation, and a trimethylaminoethyl acrylate cation.

As the cation of the ionic liquid, a cation represented by the following Formula (2-A) to (2-D) is also preferable.

[Chem. 1]

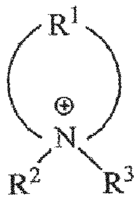

(2-A)

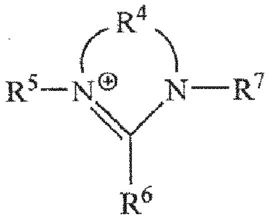

(2-B)

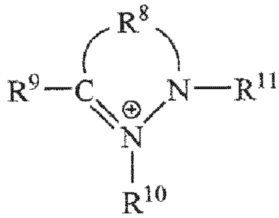

(2-C)

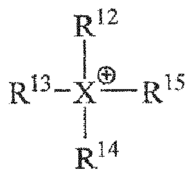

(2-D)

In Formula (2-A), $R^1$ represents a hydrocarbon group having 4 to 10 carbon atoms (preferably a hydrocarbon group having 4 to 8 carbon atoms, and more preferably a hydrocarbon group having 4 to 6 carbon atoms) and may contain a hetero atom, and $R^2$ and $R^3$ are the same as or different from each other and each represent a hydrogen atom or a hydrocarbon group having 1 to 12 carbon atoms (preferably a hydrocarbon group having 1 to 8 carbon atoms, more preferably a hydrocarbon group having 2 to 6 carbon atoms, and still more preferably a hydrocarbon group having 2 to 4 carbon atoms) and may contain a hetero atom. However, when a nitrogen atom forms a double bond with an adjacent carbon atom, $R^3$ is not present.

$R^4$ in Formula (2-B) represents a hydrocarbon group having 2 to 10 carbon atoms (preferably a hydrocarbon group having 2 to 8 carbon atoms, and more preferably a hydrocarbon group having 2 to 6 carbon atoms) and may contain a hetero atom, and $R^5$, $R^6$, and $R^7$ are the same as or different from one another and each represent a hydrogen atom or a hydrocarbon group having 1 to 12 carbon atoms (preferably a hydrocarbon group having 1 to 8 carbon atoms, more preferably a hydrocarbon group having 2 to 6 carbon atoms, and still more preferably a hydrocarbon group having 2 to 4 carbon atoms) and may contain a hetero atom.

$R^8$ in Formula (2-C) represents a hydrocarbon group having 2 to 10 carbon atoms (preferably a hydrocarbon group having 2 to 8 carbon atoms, and more preferably a hydrocarbon group having 2 to 6 carbon atoms) and may contain a hetero atom, and $R^9$, $R^{10}$, and $R^{11}$ are the same as or different from one another and each represent a hydrogen atom or a hydrocarbon group having 1 to 16 carbon atoms (preferably a hydrocarbon group having 1 to 10 carbon atoms, and more preferably a hydrocarbon group having 1 to 8 carbon atoms) and may contain a hetero atom.

X in Formula (2-D) represents a nitrogen atom, a sulfur atom, or a phosphorus atom, and $R^{12}$, $R^{13}$, $R^{14}$, and $R^{15}$ are the same as or different from one another and each represent a hydrocarbon group having 1 to 16 carbon atoms (preferably a hydrocarbon group having 1 to 14 carbon atoms, more preferably a hydrocarbon group having 1 to 10 carbon atoms, still more preferably a hydrocarbon group having 1 to 8 carbon atoms, and particularly preferably a hydrocarbon group having 1 to 6 carbon atoms), and may contain a hetero atom. However, when X is a sulfur atom, $R^{12}$ is not present.

In the embodiment of the present invention, the cation of the ionic liquid contains at least one selected from the group consisting of the nitrogen-containing onium cation, the sulfur-containing onium cation, and the phosphorus-containing onium cation.

A molecular weight of the cation in the ionic liquid is, for example, 500 or less, preferably 400 or less, more preferably 300 or less, still more preferably 250 or less, particularly preferably 200 or less, and most preferably 160 or less. The molecular weight of the cation in the ionic liquid is usually 50 or more. It is considered that the cation in the ionic liquid has a property of moving to a cathode side in the pressure-sensitive adhesive layer to be biased to the vicinity of an interface between the pressure-sensitive adhesive layer and the adherend when the voltage is applied. Thus, in the present invention, the adhesive force during voltage application is reduced with respect to the initial adhesive force, and the ability of electro-debonding is generated. The cation having a small molecular weight, such as a molecular weight of 500 or less, facilitates the movement of the cation to the cathode side in the pressure-sensitive adhesive layer, and is suitable for increasing the rate of decrease in adhesive force when the voltage is applied.

Examples of a commercially available product of the ionic liquid include "Elexcel AS-110", "Elexcel MP-442", "Elexcel IL-210", "Elexcel MP-471", "Elexcel MP-456", and "Elexcel AS-804" manufactured by Dai-ichi Kogyo Seiyaku Co., Ltd., "HMI-FSI" manufactured by Mitsubishi Materials Corporation, and "CIL-312" and "CIL-313" manufactured by Japan Carlit Co., Ltd.

An ionic conductivity of the ionic liquid is preferably 0.1 mS/cm or more. The ionic conductivity of the ionic liquid is more preferably 1 mS/cm or more, still more preferably 3 mS/cm or more, yet still more preferably 5 mS/cm or more, even still more preferably 10 mS/cm or more, particularly preferably 15 mS/cm or more, and most preferably 20 mS/cm or more. An upper limit thereof is not particularly limited, but the adhesive force is sufficiently reduced even at a low voltage by having the ionic conductivity described above. The ionic conductivity can be measured by an AC impedance method using, for example, a 1260 frequency response analyzer manufactured by Solartron.

A content (blending amount) of the ionic liquid in the pressure-sensitive adhesive composition according to the embodiment of the present invention is preferably 0.5 parts by mass or more with respect to 100 parts by mass of the first polymer from the viewpoint of reducing the adhesive force during voltage application, and is preferably 30 parts by mass or less with respect to 100 parts by mass of the first polymer from the viewpoint of increasing the initial adhesive force. From the same viewpoint, the content is more preferably 20 parts by mass or less, still more preferably 15 parts by mass or less, particularly preferably 10 parts by mass or less, and most preferably 5 parts by mass or less. In addition, the content is more preferably 0.6 parts by mass or more, still more preferably 0.8 parts by mass or more, particularly preferably 1.0 parts by mass or more, and most preferably 1.5 parts by mass or more.

(Other Components)

The pressure-sensitive adhesive composition according to the embodiment of the present invention may contain one or more kinds of components (hereinafter, may be referred to as "other components") other than the polymer and the ionic liquid as necessary, as long as the effects of the present invention are not impaired. Hereinafter, the other components that may be contained in the pressure-sensitive adhesive composition according to the embodiment of the present invention will be described.

The pressure-sensitive adhesive composition according to the embodiment of the present invention may contain an ionic additive for the purpose of controlling an electro-debonding force. As the ionic additive, for example, an ionic solid can be used.

The ionic solid is an ionic material that is a solid at 25°C. The ionic solid is not limited, but for example, a solid ionic material can be used among the ionic materials obtained by combining the anion and the cation exemplified in the description of the ionic liquid described above. When the pressure-sensitive adhesive composition contains the ionic solid, a content of the ionic solid is preferably 0.5 parts by mass or more, and more preferably 1 part by mass or more, and is preferably 10 parts by mass or less, more preferably 5 parts by mass or less, and still more preferably 2.5 parts by mass or less, with respect to 100 parts by mass of the first polymer.

The pressure-sensitive adhesive composition according to the embodiment of the present invention may contain a crosslinking agent as necessary for the purpose of improving a creep property and a shear property by crosslinking the polymer. Examples of the crosslinking agent include an isocyanate-based crosslinking agent, an epoxy-based crosslinking agent, a melamine-based crosslinking agent, a peroxide-based crosslinking agent, a urea-based crosslinking agent, a metal alkoxide-based crosslinking agent, a metal chelate-based crosslinking agent, a metal salt-based crosslinking agent, an oxazoline-based crosslinking agent, an aziridine-based crosslinking agent, and an amine-based crosslinking agent. Examples of the isocyanate-based crosslinking agent include toluene diisocyanate and methylene bisphenyl isocyanate. Examples of the epoxy-based crosslinking agent include N,N,N',N'-tetraglycidyl-m-xylenediamine, diglycidylaniline, 1,3-bis(N,N-diglycidylaminomethyl)cyclohexane, and 1,6-hexanediol diglycidyl ether. When the crosslinking agent is contained, a content of the crosslinking agent is preferably 0.1 parts by mass or more, and more preferably 0.7 parts by mass or more, and is preferably 50 parts by mass or less, more preferably 10 parts by mass or less, and still more preferably 3 parts by mass or less, with respect to 100 parts by mass of the first polymer. The crosslinking agents may be used alone or in combination of two or more kinds thereof.

The pressure-sensitive adhesive composition according to the embodiment of the present invention may contain polyethylene glycol or tetraethylene glycol dimethyl ether as necessary for the purpose of facilitating the movement of the ionic liquid when the voltage is applied. Polyethylene glycol or tetraethylene glycol dimethyl ether having a number average molecular weight of 100 to 6,000 can be used. When these components are contained, a content thereof is preferably 0.1 parts by mass or more, more preferably 0.5 parts by mass or more, and still more preferably 1 part by mass or more, and is preferably 30 parts by mass or less, more preferably 20 parts by mass or less, and still more preferably 15 parts by mass or less, with respect to 100 parts by mass of the first polymer.

The pressure-sensitive adhesive composition according to the embodiment of the present invention may contain a conductive filler as necessary for the purpose of imparting conductivity to the pressure-sensitive adhesive composition. The conductive filler is not particularly limited, and a commonly known or commonly used conductive filler can be used. For example, graphite, carbon black, carbon fiber, or metal powder such as silver and copper can be used. When the conductive filler is contained, a content thereof is preferably 0.1 parts by mass or more and 200 parts by mass or less with respect to 100 parts by mass of the first polymer.

The pressure-sensitive adhesive composition according to the embodiment of the present invention may contain a corrosion inhibitor as necessary for the purpose of preventing corrosion of a metal adherend. The corrosion inhibitor is not particularly limited, and a commonly known or commonly used corrosion inhibitor can be used. For example, a carbodiimide compound, an adsorptive inhibitor, or a chelate-forming metal deactivator can be used.

Examples of the carbodiimide compound include 1-[3-(dimethylamino)propyl]-3-ethylcarbodiimide, 1-ethyl-3-(3-dimethylaminopropyl)carbodiimide, N,N'-dicyclohexylcarbodiimide, N,N'-diisopropylcarbodiimide, 1-methyl-3-tert-butylcarbodiimide, N-cyclohexyl-N'-(2-morpholinoethyl)carbodiimide, N,N'-di-tert-butylcarbodiimide, 1,3-bis(p-tolyl)carbodiimide, and a polycarbodiimide resin containing these as monomers. These carbodiimide compounds may be used alone or in combination of two or more kinds thereof. When the carbodiimide compound is contained in the pressure-sensitive adhesive composition according to the embodiment of the present invention, a content of the carbodiimide compound is preferably 0.01 parts by mass or more and 10 parts by mass or less with respect to 100 parts by mass of the first polymer.

Examples of the adsorptive inhibitor include alkyl amine, carboxylate, a carboxylic acid derivative, and alkyl phosphate. The adsorptive inhibitors may be used alone or in combination of two or more kinds thereof. When the alkyl amine is contained as the adsorptive inhibitor in the pressure-sensitive adhesive composition according to the embodiment of the present invention, a content of the alkyl amine is preferably 0.01 parts by mass or more and 20 parts by mass or less with respect to 100 parts by mass of the first polymer. When the carboxylate is contained as the adsorptive inhibitor in the pressure-sensitive adhesive composition according to the embodiment of the present invention, a content of the carboxylate is preferably 0.01 parts by mass or more and 10 parts by mass or less with respect to 100 parts by mass of the first polymer. When the carboxylic acid derivative is contained as the adsorptive inhibitor in the pressure-sensitive adhesive composition according to the embodiment of the present invention, a content of the carboxylic acid derivative is preferably 0.01 parts by mass or more and 10 parts by mass or less with respect to 100 parts by mass of the first polymer. When the alkyl phosphate is contained as the adsorptive inhibitor in the pressure-sensitive adhesive composition according to the embodiment of the present invention, a content of the alkyl phosphate is preferably 0.01 parts by mass or more and 10 parts by mass or less with respect to 100 parts by mass of the first polymer.

As the chelate-forming metal deactivator, for example, a triazole group-containing compound or a benzotriazole group-containing compound can be used. These chelate-forming metal deactivators are preferable because these chelate-forming metal deactivators have a high effect of inactivating a surface of a metal such as stainless steel or aluminum, and are less likely to affect the adhesion even when contained in a pressure-sensitive adhesive component. The chelate-forming metal deactivators may be used alone or in combination of two or more kinds thereof. When the chelate-forming metal deactivator is contained in the pressure-sensitive adhesive composition according to the embodiment of the present invention, a content of the chelate-forming metal deactivator is preferably 0.01 parts by mass or more and 20 parts by mass or less with respect to 100 parts by mass of the first polymer.

A total content (blending amount) of the corrosion inhibitor is preferably 0.01 parts by mass or more and 30 parts by mass or less with respect to 100 parts by mass of the first polymer

The pressure-sensitive adhesive composition according to the embodiment of the present invention may further contain various additives such as a filler, a plasticizer, an anti-aging agent, an antioxidant, a pigment (dye), a flame retardant, a solvent, a surfactant (leveling agent), a rust inhibitor, and an antistatic agent. A total content of these components is not particularly limited as long as the effects of the present invention are exhibited, but is preferably 0.01 parts by mass or more and 20 parts by mass or less, more preferably 10 parts by mass or less, and still more preferably 5 parts by mass or less with respect to 100 parts by mass of the first polymer.

Examples of the filler include silica, iron oxide, zinc oxide, aluminum oxide, titanium oxide, barium oxide, magnesium oxide, calcium carbonate, magnesium carbonate, zinc carbonate, pyrophyllite clay, kaolin clay, and calcined clay.

As the plasticizer, a known and commonly used plasticizer used in general resin compositions and the like can be used, and for example, oil such as paraffin oil and process oil, liquid rubber such as liquid polyisoprene, liquid polybutadiene, and liquid ethylene-propylene rubber, tetrahydrophthalic acid, azelaic acid, benzoic acid, phthalic acid, trimellitic acid, pyromellitic acid, adipic acid, sebacic acid, fumaric acid, maleic acid, itaconic acid, citric acid, and derivatives thereof, dioctyl phthalate (DOP), dibutyl phthalate (DBP), dioctyl adipate, diisononyl adipate (DINA), and isodecyl succinate can be used.

Examples of the anti-aging agent include hindered phenol-based compounds, and aliphatic or aromatic hindered amine-based compounds.

Examples of the antioxidant include butyl hydroxytoluene (BHT) and butyl hydroxyanisole (BHA).

Examples of the pigment include inorganic pigments such as titanium dioxide, zinc oxide, ultramarine, red iron oxide, lithopone, lead, cadmium, iron, cobalt, aluminum, hydrochloride, and sulfate, and organic pigments such as azo pigments and copper phthalocyanine pigments.

Examples of the rust inhibitor include zinc phosphate, tannic acid derivatives, phosphate esters, basic sulfonates, and various rust inhibiting pigments.

Examples of the tackifier include a titanium coupling agent and a zirconium coupling agent.

Examples of the antistatic agent typically include quaternary ammonium salts, or hydrophilic compounds such as polyglycolic acid and ethylene oxide derivatives.

<Initial Adhesive Force and Rate of Decrease in Adhesive Force due to Voltage Application>

The adhesive force of the pressure-sensitive adhesive composition according to the embodiment of the present invention can be evaluated by various methods, and can be evaluated by, for example, a 180° peel test described in

Examples.

The pressure-sensitive adhesive composition according to the embodiment of the present invention has an initial adhesive force of preferably 1.5 N/cm or more, more preferably 2.0 N/cm or more, still more preferably 2.5 N/cm or more, particularly preferably 3.0 N/cm or more, and most preferably 3.5 N/cm or more, as measured by forming a pressure-sensitive adhesive sheet and performing the 180° peel test as described in Examples. When the initial adhesive force is 1.5 N/cm or more, adhesion to the adherend is sufficient, and the adherend is less likely to be debonded or displaced.

The pressure-sensitive adhesive composition according to the embodiment of the present invention preferably has an adhesive force that is sufficiently smaller than the initial adhesive force, as measured by forming a pressure-sensitive adhesive sheet, leaving the pressure-sensitive adhesive sheet for a predetermined period of time under an environment having a predetermined temperature and humidity, applying a voltage of 30V for 30 seconds, and then performing the 180° peel test while applying the voltage of 30V as described in Examples.

That is, a rate of decrease in adhesive force is preferably 75% or more, and more preferably 80% or more, the rate of decrease in adhesive force being calculated by the following Formula (C) from the adhesive force measured by the above method (simply referred to as an "adhesive force during voltage application" in the following Formula (C)) and the initial adhesive force. The predetermined temperature, humidity, and period of time are preferably 60°C, 90% RH, and 168 hours, and particularly preferably 60°C, 90% RH, and 500 hours. If the adhesive force after 500 hours at 60°C and 90% RH is sufficiently smaller than the initial adhesive force, the moisture and heat stability is excellent even after storage in a high-temperature and high-humidity environment.

$$\text{Rate of decrease in adhesive force (\%)} = \{1 - (\text{adhesive force during voltage application}/\text{initial adhesive force})\} \times 100 \quad \text{(C)}$$

The applied voltage and the voltage application time during electrical debonding are not limited to those described above, and are not particularly limited as long as the pressure-sensitive adhesive sheet can be debonded. The preferred ranges are shown below.

The applied voltage is preferably 1 V or more, more preferably 3 V or more, and still more preferably 6 V or more. Further, the applied voltage is preferably 100 V or less, more preferably 50 V or less, still more preferably 30 V or less, and particularly preferably 15 V or less.

The voltage application time is preferably 60 seconds or less, more preferably 40 seconds or less, still more preferably 20 seconds or less, and particularly preferably 10 seconds or less. In such a case, workability is excellent. The shorter application time is more preferable, but the application time is usually 1 second or more.

<Method for Producing Pressure-sensitive Adhesive Composition>

The pressure-sensitive adhesive composition of the present invention is not particularly limited, but can be produced by appropriately stirring and mixing the polymer, the ionic liquid, and the additive, and as needed, the crosslinking agent, the polyethylene glycol, the conductive filler, and the like are blended therewith.

[Pressure-sensitive Adhesive Sheet]

(Configuration of Pressure-sensitive Adhesive Sheet)

The pressure-sensitive adhesive sheet according to the embodiment of the present invention is not particularly limited as long as the pressure-sensitive adhesive sheet has at least one pressure-sensitive adhesive layer (hereinafter, also referred to as "electrically debondable pressure-sensitive adhesive layer") formed of the pressure-sensitive adhesive composition according to the embodiment of the present invention. The pressure-sensitive adhesive sheet according to the embodiment of the present invention may have a pressure-sensitive adhesive layer containing no ionic liquid (hereinafter, may be referred to as "other pressure-sensitive adhesive layers") other than the electrically debondable pressure-sensitive adhesive layer. The pressure-sensitive adhesive sheet according to an embodiment of the present invention may include a substrate, a conductive layer, a conduction substrate, an intermediate layer, an undercoat layer, and the like in addition to the above. The pressure-sensitive adhesive sheet according to the embodiment of the present invention may be, for example, wound in a roll shape or in a sheet-like form. The term "pressure-sensitive adhesive sheet" includes the meaning of a "pressure-sensitive adhesive tape". That is, the pressure-sensitive adhesive sheet according to the embodiment of the present invention may be a pressure-sensitive adhesive tape having a tape-like form.

The pressure-sensitive adhesive sheet according to the embodiment of the present invention may be a double-sided pressure-sensitive adhesive sheet which does not have a substrate and is only formed of an electrically debondable pressure-sensitive adhesive layer, that is, which does not have a substrate layer (substrate-free). The pressure-sensitive

adhesive sheet according to the embodiment of the present invention may be a double-sided pressure-sensitive adhesive sheet having a substrate, in which both surfaces of the substrate are pressure-sensitive adhesive layers (electrically debondable pressure-sensitive adhesive layer or other pressure-sensitive adhesive layers). The pressure-sensitive adhesive sheet according to the embodiment of the present invention may be a single-sided pressure-sensitive adhesive sheet having a substrate, in which only one surface of the substrate is a pressure-sensitive adhesive layer (electrically debondable pressure-sensitive adhesive layer or other pressure-sensitive adhesive layers). The pressure-sensitive adhesive sheet according to the embodiment of the present invention may have a release liner for the purpose of protecting a surface of the pressure-sensitive adhesive layer, but the release liner is not included in the pressure-sensitive adhesive sheet according to the embodiment of the present invention.

A structure of the pressure-sensitive adhesive sheet according to the embodiment of the present invention is not particularly limited, but preferred examples thereof include a pressure-sensitive adhesive sheet X1 shown in FIG. 1, a pressure-sensitive adhesive sheet X2 having a laminate structure shown in FIG. 2, and a pressure-sensitive adhesive sheet X3 having a laminate structure shown in FIG. 3. The pressure-sensitive adhesive sheet X1 is a substrate-free double-sided pressure-sensitive adhesive sheet formed only of an electrically debondable pressure-sensitive adhesive layer 1. The pressure-sensitive adhesive sheet X2 is a substrate-supported double-sided pressure-sensitive adhesive sheet having the following layer configuration: a pressure-sensitive adhesive layer 2, a conduction substrate 5 (a substrate 3 and a conductive layer 4), and the electrically debondable pressure-sensitive adhesive layer 1. The pressure-sensitive adhesive sheet X3 is a substrate-supported double-sided pressure-sensitive adhesive sheet having the following layer configuration: the pressure-sensitive adhesive layer 2, the conduction substrate 5 (the substrate 3 and the conductive layer 4), the electrically debondable pressure-sensitive adhesive layer 1, the conduction substrate 5 (the substrate 3 and the conductive layer 4), and the pressure-sensitive adhesive layer 2. In the conduction substrate 5 of the pressure-sensitive adhesive sheets X2 and X3 shown in FIGs. 2 and 3, the substrate 3 is not essential, and only the conductive layer 4 may be provided. The pressure-sensitive adhesive sheet X2 of FIG. 2 may be a single-sided pressure-sensitive adhesive sheet which is not provided with the pressure-sensitive adhesive layer 2.

The substrate 3 is not particularly limited, but examples thereof include a paper-based substrate such as paper, a fiber-based substrate such as cloth and nonwoven fabric, a plastic-based substrate such as a film or sheet made of various plastics (polyolefin-based resins such as polyethylene and polypropylene, polyester-based resins such as polyethylene terephthalate, acrylic resins such as polymethyl methacrylate, and the like), and a laminate thereof. The substrate may be in the form of a single layer or a plurality of layers. If necessary, the substrate may be subjected to various treatments such as a back surface treatment, an antistatic treatment, and an undercoating treatment.

The conductive layer 4 is not particularly limited as long as the conductive layer 4 is a layer having conductivity, but may be a metallic substrate such as a metal foil (for example, aluminum, magnesium, copper, iron, tin, or gold) or a metal plate (for example, aluminum, magnesium, copper, iron, tin, or silver), a conductive polymer, or the like, or may be a deposited metal film or the like provided on the substrate 3.

The conduction substrate 5 is not particularly limited as long as the conduction substrate 5 is a substrate having a conductive layer (carrying a current), but examples thereof include a substrate in which a metal layer is formed on a surface of the substrate. For example, there is a substrate in which a metal layer is formed on a surface of the exemplified substrate by a method such as a plating method, a chemical vapor deposition method, and sputtering. Examples of the metal layer include the metal, metal plates, and conductive polymers exemplified above.

In the pressure-sensitive adhesive sheet X1, the adherends on both surfaces are preferably adherends having a metal adherend surface. In the pressure-sensitive adhesive sheet X2, an adherend on the electrically debondable pressure-sensitive adhesive layer 1 side is preferably an adherend having a metal adherend surface.

Examples of the metal adherend surface include a surface that has conductivity and is made of a metal containing aluminum, copper, iron, magnesium, tin, gold, silver, lead, or the like as a main component, and among these, a surface made of a metal (for example, stainless steel) containing iron or aluminum is preferable. Examples of the adherend having the metal adherend surface include a sheet, a part, and a plate made of a metal containing aluminum, copper, iron, magnesium, tin, gold, silver, lead, or the like as a main component. An adherend other than the adherend having the metal adherend surface is not particularly limited, but examples thereof include a fiber sheet such as paper, cloth, and nonwoven fabric, and various plastic films and sheets.

A thickness of the electrically debondable pressure-sensitive adhesive layer 1 is preferably 1 μm or more and 1,000 μm or less from the viewpoint of the initial adhesive force. An upper limit of the thickness of the electrically debondable pressure-sensitive adhesive layer 1 is more preferably 500 μm, still more preferably 300 μm, still more preferably 200 μm, still more preferably 150 μm, still more preferably 100 μm, still more preferably 80 μm, yet still more preferably 70 μm, even still more preferably 60 μm , and even yet still more preferably 50 μm , and a lower limit of the thickness is more preferably 5 μm, still more preferably 10 μm, yet still more preferably 20 μm, and even still more preferably 30 μm.

A thickness of the electrically debondable pressure-sensitive adhesive sheet according to the present embodiment is preferably 20 μm or more and 3,000 μm or less. An upper limit of the thickness is more preferably 1,000 μm,

still more preferably 500 μm, still more preferably 300 μm, still more preferably 250 μm, yet still more preferably 200 μm, even still more preferably 150 μm, and even yet still more preferably 100 μm, and a lower limit of the thickness is more preferably 30 μm, and still more preferably 50 μm.

A thickness of the pressure-sensitive adhesive layer 2 is preferably 1 μm or more and 2,000 μm or less from the viewpoint of the adhesive force. An upper limit of the thickness of the pressure-sensitive adhesive layer 2 is more preferably 1,000 μm, still more preferably 500 μm, and particularly preferably 100 μm, and a lower limit of the thickness is more preferably 3 μm, still more preferably 5 μm, and particularly preferably 8 μm.

A thickness of the substrate 3 is preferably 10 μm or more and 1,000 μm or less. An upper limit of the thickness is more preferably 500 μm, still more preferably 300 μm, and particularly preferably 100 μm, and a lower limit of the thickness is more preferably 12 μm, and still more preferably 25 μm.

A thickness of the conductive layer 4 is preferably 0.001 μm or more and 1,000 μm or less. An upper limit of the thickness is more preferably 500 μm, still more preferably 300 μm, yet still more preferably 50 μm, and even still more preferably 10 μm , and a lower limit of the thickness is more preferably 0.01 μm, still more preferably 0.03 μm, and yet still more preferably 0.05 μm.

A thickness of the conduction substrate 5 is preferably 10 μm or more and 1,000 μm or less. An upper limit of the thickness is more preferably 500 μm, still more preferably 300 μm, and particularly preferably 100 μm, and a lower limit of the thickness is more preferably 12 μm, and still more preferably 25 μm.

The surfaces of the electrically debondable pressure-sensitive adhesive layer and the other pressure-sensitive adhesive layer of the pressure-sensitive adhesive sheet according to the embodiment of the present invention may be protected by release liners. The release liner is not particularly limited, but examples thereof include a release liner in which a surface of a substrate (liner substrate) such as paper or a plastic film is subjected to a silicone treatment, and a release liner in which a surface of a substrate (liner substrate) such as paper or a plastic film is laminated with a polyolefin-based resin. A thickness of the release liner is not particularly limited, but is preferably 10 μm or more and 100 μm or less.

A thickness of the pressure-sensitive adhesive sheet according to the embodiment of the present invention is preferably 20 μm or more and 3,000 μm or less. An upper limit of the thickness is more preferably 1,000 μm, still more preferably 500 μm, still more preferably 300 μm , still more preferably 250 μm, yet still more preferably 200 μm, even still more preferably 150 μm, and even yet still more preferably 100 μm, and a lower limit of the thickness is more preferably 30 μm, and still more preferably 50 μm.

In particular, in the case of the pressure-sensitive adhesive sheet X2 shown in FIG. 2, a thickness of the pressure-sensitive adhesive sheet is preferably 50 μm or more and 2,000 μm or less. An upper limit of the thickness is more preferably 1,000 μm, still more preferably 500 μm, still more preferably 300 μm , still more preferably 250 μm, yet still more preferably 200 μm, and even yet still more preferably 150 μm, and a lower limit of the thickness is more preferably 80 μm, and still more preferably 100 μm.

In particular, in the case of the pressure-sensitive adhesive sheet X3 shown in FIG. 3, a thickness of the pressure-sensitive adhesive sheet is preferably 20 μm or more and 3,000 μm or less. An upper limit of the thickness is more preferably 1,000 μm, still more preferably 500 μm, still more preferably 300 μm, yet still more preferably 250 μm , even still more preferably 200 μm, and even yet still more preferably 150 μm, and a lower limit of the thickness is more preferably 50 μm, still more preferably 80 μm, and yet still more preferably 100 μm.

The pressure-sensitive adhesive sheet according to the embodiment of the present invention may further include a coating layer. The coating layer is preferably provided between the electrically debondable pressure-sensitive adhesive layer and the conductive layer.

The electrically debondable pressure-sensitive adhesive sheet according to the present embodiment further includes the coating layer, and thus the coating layer serves as a barrier for an ionic liquid contained in the electrically debondable pressure-sensitive adhesive layer to enter the conductive layer by the application of a voltage, and has an effect of preventing the conductive layer from being debonded from the substrate.

The coating layer is in contact with the electrically debondable pressure-sensitive adhesive layer, and this improves adhesion between the electrically debondable pressure-sensitive adhesive layer and the conductive layer. Further, the coating layer exhibits such an effect of preventing the debonding of the conductive layer in the electrically debondable pressure-sensitive adhesive sheet due to decrease in an interfacial adhesive force between the electrically debondable pressure-sensitive adhesive layer and a conductive material (for example, an adherend) caused by thermal curing of the electrically debondable pressure-sensitive adhesive layer exposed to a high-temperature environment.

The coating layer is a layer containing a resin or an inorganic substance as a main component, and can be formed of a resin composition containing a resin component as a main component or a composition containing an inorganic material as a main component.

The coating layer preferably contains at least one resin selected from a polyester-based resin, an acrylic resin, an epoxy-based resin, and a urethane-based resin, or at least one inorganic substance selected from SiNx, SiOx, $Al_2O_3$, Ni, and NiCr.

(Method for Producing Pressure-sensitive Adhesive Sheet)

As a method for producing the pressure-sensitive adhesive sheet according to the embodiment of the present invention, a known or commonly used production method can be used. Examples of a method for forming the electrically debondable pressure-sensitive adhesive layer in the pressure-sensitive adhesive sheet according to the embodiment of the present invention include a method in which a solution in which the pressure-sensitive adhesive composition according to the embodiment of the present invention is dissolved in a solvent as necessary is applied onto the release liner, and dried and/or cured. Examples of a method for forming the other pressure-sensitive adhesive layer include a method in which a solution in which a pressure-sensitive adhesive composition containing neither the ionic liquid nor the additive is dissolved in a solvent as necessary is applied onto the release liner, and dried and/or cured. As the solvent and the release liner, those described above can be used.

In the coating, a commonly used coater (for example, a gravure roll coater, a reverse roll coater, a kiss roll coater, a dip roll coater, a bar coater, a knife coater, or a spray roll coater) can be used.

The electrically debondable pressure-sensitive adhesive layer and another pressure-sensitive adhesive layer can be produced by the above method, and the pressure-sensitive adhesive sheet according to the embodiment of the present invention can be produced by appropriately laminating the electrically debondable pressure-sensitive adhesive layer and the other pressure-sensitive adhesive layer on the substrate, the conductive layer, and the conduction substrate. A pressure-sensitive adhesive sheet may be produced by applying the pressure-sensitive adhesive composition using the substrate, the conductive layer, and the conduction substrate, instead of the release liner.

(Method for Electrically Debonding Pressure-sensitive Adhesive Sheet)

Debonding of the pressure-sensitive adhesive sheet according to the embodiment of the present invention from the adherend can be performed by applying the voltage to the electrically debondable pressure-sensitive adhesive layer to generate a potential difference in a thickness direction of the electrically debondable pressure-sensitive adhesive layer.

For example, a bonded body obtained by adhering the pressure-sensitive adhesive sheet X1 to a conductive adherend can be debonded by energizing the conductive adherend and applying the voltage to the electrically debondable pressure-sensitive adhesive layer.

In a case where an adherend on the electrically debondable pressure-sensitive adhesive layer side in the pressure-sensitive adhesive sheet X2 is an adherend having a metal adherend surface, the pressure-sensitive adhesive sheet can be debonded from the adherend by energizing the conductive adherend and the conductive layer 4 and applying the voltage to the electrically debondable pressure-sensitive adhesive layer.

In the case of the pressure-sensitive adhesive sheet X3, both the conductive layers 4 are energized, and the voltage is applied to the electrically debondable pressure-sensitive adhesive layer, so that the pressure-sensitive adhesive sheet can be debonded from the adherend.

The energization is preferably performed by connecting terminals to one end and the other end of the pressure-sensitive adhesive sheet so that the voltage is applied to the entire electrically debondable pressure-sensitive adhesive layer. In a case where the adherend includes the metal adherend surface, the one end and the other end may be a part of the adherend having the metal adherend surface. At the time of debonding, the voltage may be applied after water is added to an interface between the metal adherend surface and the electrically debondable pressure-sensitive adhesive layer.

(Applications of Pressure-sensitive Adhesive Sheet)

As a removing technique in the related art, there are a pressure-sensitive adhesive layer that is debonded by being cured by ultraviolet (UV) irradiation and a pressure-sensitive adhesive layer that is debonded by heat. A pressure-sensitive adhesive sheet using such a pressure-sensitive adhesive layer cannot be used when the ultraviolet (UV) irradiation is difficult to perform or a member as an adherend is damaged by the heat. The pressure-sensitive adhesive sheet according to the embodiment of the present invention including the electrically debondable pressure-sensitive adhesive layer does not use the ultraviolet rays or the heat, and thus the debonding can be easily performed by applying the voltage without damaging the member as the adherend.

From the above characteristics, the pressure-sensitive adhesive sheet according to the embodiment of the present invention is suitable for use in fixing, to a housing, a secondary battery (for example, a lithium-ion battery pack) used in a mobile terminal such as a smartphone, a mobile phone, a notebook computer, a video camera, or a digital camera. In addition, the pressure-sensitive adhesive sheet according to the embodiment of the present invention is suitable for use in fixing an in-vehicle member (for example, a battery or a motor). Further, the pressure-sensitive adhesive sheet according to the embodiment of the present invention is suitable for fixing applications (for example, a ceramic capacitor, a lithium-ion battery, and the like) in a semiconductor manufacturing process and inspection. Furthermore,

the pressure-sensitive adhesive sheet according to the embodiment of the present invention is suitable for protection applications (for example, a stainless steel plate for a railway) in a metal working process.

Examples of a rigid member to be bonded by the pressure-sensitive adhesive sheet according to the embodiment of the present invention include a silicon substrate for a semiconductor wafer, a sapphire substrate, a SiC substrate, and a metal base substrate for LED, a TFT substrate and a color filter substrate for a display, and a base substrate for an organic EL panel. Examples of a fragile member to be bonded by the double-sided pressure-sensitive adhesive sheet include a semiconductor substrate such as a compound semiconductor substrate, a silicon substrate for MEMS devices, a passive matrix substrate, a surface cover glass for smartphones, a One Glass Solution (OGS) substrate in which a touch panel sensor is attached to the cover glass, an organic substrate and an organic-inorganic hybrid substrate containing silsesquioxane or the like as a main component, a flexible glass substrate for flexible displays, and graphene sheets.

[Bonded Body]

The bonded body according to the embodiment of the present invention is a bonded body including the pressure-sensitive adhesive sheet according to the embodiment of the present invention and the conductive material, in which the electrically debondable pressure-sensitive adhesive layer in the pressure-sensitive adhesive sheet is adhered to the conductive material.

The conductive material is preferably the adherend having the metal adherend surface, and examples of the adherend having the metal adherend surface include an adherend made of a metal containing aluminum, copper, iron, magnesium, tin, gold, silver, lead, or the like as a main component. Among these, a metal containing aluminum is preferable.

Examples of the bonded body according to the present embodiment include a bonded body in which the pressure-sensitive adhesive sheet X1 and a side on the electrically debondable pressure-sensitive adhesive layer 1 of the pressure-sensitive adhesive sheet X1 are adhered to the conductive adherend having, for example, a metal adherend surface.

Examples of the bonded body according to the present embodiment include a bonded body in which the other pressure-sensitive adhesive layers 2 on both surfaces of the pressure-sensitive adhesive sheet X3 are adhered to the conductive material having, for example, a metal adherend surface, and a bonded body in which one of the other pressure-sensitive adhesive layers 2 of the pressure-sensitive adhesive sheet X3 is adhered to a non-conductive material.

Examples of the bonded body according to the embodiment of the present invention include a bonded body which is the pressure-sensitive adhesive sheet X1 and includes an adherend having a metal adherend surface on both surfaces of the electrically debondable pressure-sensitive adhesive layer 1, a bonded body which is the pressure-sensitive adhesive sheet X2 and includes an adherend having a metal adherend surface on the electrically debondable pressure-sensitive adhesive layer 1 side and an adherend on the pressure-sensitive adhesive layer 2 side, and a bonded body which is the pressure-sensitive adhesive sheet X3 and includes an adherend on both surfaces of the pressure-sensitive adhesive layer 2.

As described above, the following matters are disclosed in the present specification.

<1> A pressure-sensitive adhesive composition containing a first polymer as a base polymer and an ionic liquid, the pressure-sensitive adhesive composition further including: a second polymer having a glass transition temperature (Tg) of 40°C to 180°C.

<2> The pressure-sensitive adhesive composition according to <1>, in which a difference in HSP value between the first polymer and the second polymer is 0 to 3.

<3> The pressure-sensitive adhesive composition according to <1> or <2>, in which the second polymer contains an organic polymer compound, and a content of the organic polymer compound in the second polymer is 1 to 50 parts by mass with respect to 100 parts by mass of the first polymer.

<4> The pressure-sensitive adhesive composition according to any one of <1> to <3>, in which an anion of the ionic liquid contains at least one selected from the group consisting of a bis(fluorosulfonyl)imide anion and a bis(trifluoromethanesulfonyl)imide anion.

<5> The pressure-sensitive adhesive composition according to any one of <1> to <4>, in which a cation of the ionic liquid contains at least one selected from the group consisting of a nitrogen-containing onium cation, a sulfur-containing onium cation, and a phosphorus-containing onium cation.

<6> The pressure-sensitive adhesive composition according to any one of <1> to <5>, in which a content of the ionic liquid is 0.5 parts by mass or more and 30 parts by mass or less with respect to 100 parts by mass of the first polymer.

<7> The pressure-sensitive adhesive composition according to any one of <1> to <6>, in which the first polymer contains at least one selected from the group consisting of a polyester-based polymer, a urethane-based polymer,

and an acrylic polymer having a carboxyl group, an alkoxy group, a hydroxyl group and/or an amide bond.

<8> The pressure-sensitive adhesive composition according to any one of <1> to <7>, in which the second polymer contains a tackifying resin.

<9> The pressure-sensitive adhesive composition according to <8>, in which the tackifying resin has a softening point of 100°C or higher.

<10> The pressure-sensitive adhesive composition according to <8> or <9>, in which a content of the tackifying resin is 1 to 50 parts by mass with respect to 100 parts by mass of the first polymer.

<11> The pressure-sensitive adhesive composition according to any one of <8> to <10>, in which the tackifying resin is a terpene-based tackifying resin or a rosin-based tackifying resin.

<12> The pressure-sensitive adhesive composition according to any one of <1> to <11>, which is used for electrical debonding.

<13> A pressure-sensitive adhesive sheet including: a pressure-sensitive adhesive layer formed of the pressure-sensitive adhesive composition according to any one of <1> to <12>.

<14> A bonded body including: the pressure-sensitive adhesive sheet according to <13>; and a conductive material, in which the pressure-sensitive adhesive layer is adhered to the conductive material.

## EXAMPLES

Hereinafter, the present invention will be described in more detail with reference to Examples, but the present invention is not limited to these Examples. A weight average molecular weight to be described below is measured by the gel permeation chromatography (GPC).

<First Polymer>

(Preparation of Acrylic Polymer 1 Solution)

Into a separable flask were put 87 parts by mass of n-butyl acrylate (BA), 10 parts by mass of 2-methoxyethyl acrylate (MEA), and 3 parts by mass of acrylic acid (AA) as the monomer components, and 150 parts by mass of ethyl acetate as the polymerization solvent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 63°C and allowed to react for 6 hours. Thereafter, ethyl acetate was added to obtain an acrylic polymer 1 solution having a solid content concentration of 40% by mass. A weight average molecular weight of the obtained acrylic polymer 1 was 750,000. In addition, Tg was -45°C.

(Preparation of Acrylic Polymer 2 Solution)

Into a separable flask were put 95 parts by mass of n-butyl acrylate (BA) and 5 parts by mass of acrylic acid (AA) as the monomer components, and 150 parts by mass of ethyl acetate as the polymerization solvent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 63°C and allowed to react for 6 hours. Thereafter, ethyl acetate was added to obtain an acrylic polymer 2 solution having a solid content concentration of 40 by mass. A weight average molecular weight of the obtained acrylic polymer 2 was 600,000. In addition, Tg was -47°C.

<Second Polymer>

(Polymer 1)

Into a separable flask were put 95 parts by mass of cyclohexyl methacrylate (CHMA) and 5 parts by mass of acrylic acid (AA) as the monomer components, 300 parts by mass of ethyl acetate as the polymerization solvent, and 3 parts by mass of 2-mercaptoethanol (thioglycol) as the chain transfer agent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 65°C and allowed to react for 3 hours, and then allowed to react for 2 hours at 75°C to obtain a polymer 1 solution having a solid content concentration of 25% by mass.

(Polymer 2)

Into a separable flask were put 100 parts by mass of isobornyl methacrylate (IBXMA) as the monomer component, 300 parts by mass of ethyl acetate as the polymerization solvent, and 3 parts by mass of 2-mercaptoethanol (thioglycol) as the chain transfer agent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 65°C and allowed to react for 3 hours, and then allowed to react for 2 hours at 75°C to obtain a polymer 2 solution having a solid content concentration of 25% by mass.

(Polymer 3)

Into a separable flask were put 95 parts by mass of cyclohexyl methacrylate (CHMA) and 5 parts by mass of 4-hydroxybutyl acrylate (4HBA) as the monomer components, 300 parts by mass of ethyl acetate as the polymerization solvent, and 3 parts by mass of 2-mercaptoethanol (thioglycol) as the chain transfer agent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 65°C and allowed to react for 3 hours, and then allowed to react for 2 hours at 75°C to obtain a polymer 3 solution having a solid content concentration of 25% by mass.

(Polymer 4)

Into a separable flask were put 85 parts by mass of cyclohexyl methacrylate (CHMA) and 15 parts by mass of 4-hydroxybutyl acrylate (4HBA) as the monomer components, 300 parts by mass of ethyl acetate as the polymerization solvent, and 3 parts by mass of 2-mercaptoethanol (thioglycol) as the chain transfer agent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 65°C and allowed to react for 3 hours, and then allowed to react for 2 hours at 75°C to obtain a polymer 4 solution having a solid content concentration of 25% by mass.

(Polymer 7)

Into a separable flask were put 55 parts by mass of methyl acrylate (MA) and 45 parts by mass of N-vinylpyrrolidone as the monomer components, 300 parts by mass of ethyl acetate as the polymerization solvent, and 3 parts by mass of 2-mercaptoethanol (thioglycol) as the chain transfer agent, followed by stirring for 1 hour while introducing nitrogen gas. After oxygen in the polymerization system was removed in this manner, 0.2 parts by mass of 2,2'-azobisisobutyronitrile (AIBN) was added as the polymerization initiator, and the mixture was heated to 65°C and allowed to react for 3 hours, and then allowed to react for 2 hours at 75°C to obtain a polymer 7 solution having a solid content concentration of 25% by mass.

<Measurement of Tg (°C)>

Tg was calculated using the Fox formula according to the above method.

<Measurement of HSP Value>

The HSP value was calculated using the personal computer software HSPiP according to the above method.

[Examples 1 to 21 and Comparative Examples 1 to 4]

<Preparation of Pressure-sensitive Adhesive Composition>

Respective components such as the acrylic polymer solution obtained above as the first polymer, the second polymer obtained above, a second polymer shown below, a crosslinking agent, an ionic liquid, and an additive as described in Tables 1 and 2 were stirred and mixed to obtain pressure-sensitive adhesive compositions (solutions) for electrical debonding of Examples 1 to 21 and Comparative Examples 1 to 4 each adjusted to have a solid content concentration of 25% by mass. Blending amounts of the respective components are shown in Tables 1 and 2.

A value of each component in Tables 1 and 2 means parts by mass. A blending amount (parts by mass) of the polymer indicates a blending amount (parts by mass) of a solid content in the polymer solution.

<Preparation of Electrically debondable Pressure-sensitive Adhesive Layer>

The obtained pressure-sensitive adhesive composition (solution) for electrical debonding was applied using an applicator onto a release-treated surface of a polyethylene terephthalate release liner (trade name: "MRF38", manufactured by Mitsubishi Plastics, Inc.) in which a surface was release-treated so as to have a uniform thickness. Next, heating and drying were performed at 150°C for 3 minutes, and the release-treated surface of the polyethylene terephthalate release liner (trade name: "MRE38", manufactured by Mitsubishi Plastics, Inc.) in which the surface was release-treated was laminated on the pressure-sensitive adhesive layer using a hand roller to obtain an electrically debondable pressure-sensitive adhesive layer (pressure-sensitive adhesive sheet) having a thickness of 50 μm.

<Production of Substrate-supported Single-sided Pressure-sensitive Adhesive Sheet>

The obtained electrically debondable pressure-sensitive adhesive layer (pressure-sensitive adhesive sheet) was made into a sheet having a size of 10 mm × 80 mm, the MRE release liner was peeled off, and a film with a metal layer (trade name: " 1005CR", manufactured by Toray Industries, Inc., thickness: 12 μm , size: 10 mm × 100 mm) was adhered to an exposed surface of the electrically debondable pressure-sensitive adhesive layer to obtain a substrate-supported single-sided pressure-sensitive adhesive sheet.

<Preparation of Bonded Body>

A release liner of the substrate-supported single-sided pressure-sensitive adhesive sheet was peeled off, and a stainless steel plate (SUS316, size: 30 mm × 120 mm) as an adherend was adhered to the peeled surface such that one end of the pressure-sensitive adhesive sheet protruded from the adherend by about 2 mm, the pressure-sensitive adhesive sheet was pressed with a 2 kg roller reciprocated once and a resultant laminate was allowed to stand in an environment of 23°C for 30 minutes to obtain a bonded body composed of a stainless steel plate 6/an electrically debondable pressure-sensitive adhesive layer (pressure-sensitive adhesive sheet) 1'/a film with a metal layer (conduction substrate) 5'. An outline of the bonded body is shown in FIG. 4.

<Evaluation>

(180° Peel Force)

A 180° peel test was performed using the bonded bodies of Examples and Comparative Examples. The used adherend material was a stainless steel plate (SUS304, size: 30 mm × 120 mm).

Peeling was performed in an arrow direction in FIG. 4 using a peel tester (trade name: "variable angle peel tester YSP", manufactured by Asahi Seiko Co., Ltd.), an adhesive force in the 180° peel test (tensile speed: 300 mm/min, peeling temperature: 23°C) was measured, and a 180° peel force was measured and defined as an initial adhesive force. The measurement results are shown in Tables 1 and 2.

(Initial Electrical Peel Force)

The bonded body was prepared by pressing the pressure-sensitive adhesive sheet with a 2 kg roller reciprocated once and was allowed to stand in an environment of 23°C for 30 minutes. Thereafter, before peeling, electrodes of a cathode and an anode of a DC current machine were respectively attached to the bonded body at the portions of α and β in FIG. 4 and the voltage was applied for 30 seconds at a voltage of 30 V Peeling was performed in the same manner as the 180° peel force measurement described above while the voltage was applied as it was, and an adhesive force during voltage application was measured and defined as an initial electrical peel force. The measurement results are shown in Tables 1 and 2.

In addition, from the initial adhesive force and the adhesive force during voltage application measured above, the rate of decrease in adhesive force was calculated by the following Formula (C). The results are shown in Tables 1 and 2.

Rate of decrease in adhesive force (%) = {1 - (adhesive force during voltage application/initial adhesive force)} × 100 (C)

(Electrical Peel Force after Storage in Hot and Humid Environment)

The pressure-sensitive adhesive sheet was pressed with a 2 kg roller reciprocated once. Thereafter, a resultant laminate was stored in an environment of 60°C and 90% RH for 500 hours, then taken out, and was allowed to stand still at 22°C and 50% RH for 60 minutes to cool down, and then the measurement was performed. Before peeling,

electrodes of a cathode and an anode of a DC current machine were respectively attached to the bonded body at the portions of α and β in FIG. 4 and the voltage was applied for 30 seconds at a voltage of 30 V Peeling was performed in the same manner as the 180° peel force measurement described above while the voltage was applied as it was, and an adhesive force during voltage application was measured and defined as an electrical peel force after storage in a hot and humid environment. The measurement results are shown in Tables 1 and 2.

[Table 1]

Table 1

| | | | Example | | | | | | |
|---|---|---|---|---|---|---|---|---|---|
| | | | 1 | 2 | 3 | 4 | 5 | 6 | 7 |
| Composition | First polymer 1 (BA/MEA/AA = 87/10/3) | | 100 | 100 | 100 | 100 | 100 | 100 | 100 |
| | First polymer 2 (BA/AA 95/5) | | | | | | | | |
| | Ionic liquid | AS-110 | 4 | 4 | 4 | 4 | 4 | 4 | 4 |
| | Crosslinking agent | V-05 | 0.4 | 0.4 | 0.4 | 0.4 | 0.4 | 0.4 | 0.4 |
| | Adsorptive inhibitor | AMINE O | 3 | 3 | 3 | 3 | 3 | 3 | 3 |
| | | Irgacor DSSG | 0.3 | 0.3 | 0.3 | 0.3 | 0.3 | 0.3 | 0.3 |
| | Chelate-forming metal deactivator | Irgamet 30 | 0.8 | 0.8 | 0.8 | 0.8 | 0.8 | 0.8 | 0.8 |
| | Ionic liquid | EMIM-MeSO3 | 0.2 | 0.2 | 0.2 | 0.2 | 0.2 | 0.2 | 0.2 |
| | Second polymer | Polymer 1 (CHMA/AA = 95/5) | 5 | 10 | 20 | 30 | 50 | | |
| | | Polymer 2 (IBXMA = 100 | | | | | | 10 | 30 |
| | | Polymer 3 (CHMA/ 4HBA = 95/5) | | | | | | | |
| | | Polymer 4 (CHMA/ 4HBA = 85/15) | | | | | | | |
| | | Polymer 5 (ARUFON UC3000) | | | | | | | |
| | | Polymer 6 (ARUFON UH2170) | | | | | | | |
| | | Polymer 7 (MA/NVP = 55/45) | | | | | | | |

(continued)

| | | | Example | | | | | | |
|---|---|---|---|---|---|---|---|---|---|
| | | | 1 | 2 | 3 | 4 | 5 | 6 | 7 |
| Information on polymer | Second polymer Tg | [°C] | 67 | 67 | 67 | 67 | 67 | 180 | 180 |
| | Second polymer Molecular weight | | 4000 | 4000 | 4000 | 4000 | 4000 | 6000 | 6000 |
| | First polymer HSP value | | 17.8 | 17.8 | 17.8 | 17.8 | 17.8 | 17.8 | 17.8 |
| | Second polymer HSP value | | 17.9 | 17.9 | 17.9 | 17.9 | 17.9 | 16.8 | 16.8 |
| | ΔHSP value | | 0.1 | 0.1 | 0.1 | 0.1 | 0.1 | 1 | 1 |
| Adhesive force to SUS316 | 180° peel force | [N/25 mm] | 12.5 | 13 | 15 | 22 | 25 | 12 | 15 |
| Electrical peel force against SUS316 at 30V/30s | Initial electrical peel force | [N/25 mm] | <0.1 | <0.1 | <0.1 | <0.1 | <0.1 | <0.1 | <0.1 |
| | | Rate of decrease in adhesive force | < 90% | < 90% | < 90% | < 90% | < 90% | < 90% | < 90% |
| | Electrical peel force after storage in hot and humid environment (60°C/ 90% after 500 hours) | [N/25 mm] | 1.5 | 1.5 | 0.5 | 0.4 | 0.4 | 0.3 | 0.1 |
| | | Rate of decrease in adhesive force | < 90% | < 90% | < 90% | < 90% | < 90% | < 90% | < 90% |

Table 1 (continued)

| | | | Example | | | | | | |
|---|---|---|---|---|---|---|---|---|---|
| | | | 8 | 9 | 10 | 11 | 12 | 13 | 14 |
| Composition | First polymer 1 (BA/MEA/AA = 87/10/3) | | 100 | 100 | 100 | 100 | | 100 | 100 |
| | First polymer 2 (BA/AA 95/5) | | | | | | 100 | | |
| | Ionic liquid | AS-11 0 | 4 | 4 | 4 | 4 | 4 | 4 | 4 |
| | Crosslinking agent | V-05 | 0.4 | 0.4 | 0.4 | 0.4 | 0.4 | 0.4 | 0.4 |
| | Adsorptive inhibitor | AMINE O | 3 | 3 | 3 | 3 | 3 | 3 | 3 |
| | | Irgacor DSSG | 0.3 | 0.3 | 0.3 | 0.3 | 0.3 | 0.3 | 0.3 |
| | Chelate-forming metal deactivator | Irgamet 30 | 0.8 | 0.8 | 0.8 | 0.8 | 0.8 | 0.8 | 0.8 |
| | Ionic liquid | EMIM-MeSO3 | 0.2 | 0.2 | 0.2 | | | 0.2 | 0.2 |
| | Second polymer | Polymer 1 (CHMA/AA = 95/5) | | | | 30 | 30 | | |
| | | Polymer 2 (IBXMA = 100) | | | | | | | |
| | | Polymer 3 (CHMA/ 4HBA = 95/5) | 10 | 30 | | | | | |
| | | Polymer 4 (CHMA/ 4HBA = 85/15) | | | 10 | | | | |
| | | Polymer 5 (ARUFON UC3000) | | | | | | 10 | |
| | | Polymer 6 (ARUFON UH2170) | | | | | | | 10 |
| | | Polymer 7 (MA/NVP = 55/45) | | | | | | | |
| Information on polymer | Second polymer Tg | [°C] | 59.2 | 59.2 | 45 | 59.2 | 59.2 | 65 | 60 |
| | Second polymer Molecular weight | | 5000 | 5000 | 4000 | 5000 | 5000 | 10000 | 14000 |
| | First polymer HSP value | | 17.8 | 17.8 | 17.8 | 17.8 | 17.3 | 17.8 | 17.8 |
| | Second polymer HSP value | | 17.9 | 17.9 | 18.2 | 17.9 | 17.9 | 17.8 | 19.7 |
| | ΔHSP value | | 0.1 | 0.1 | 0.4 | 0.1 | 0.6 | 0 | 1.9 |

(continued)

| | | | Example | | | | | | |
|---|---|---|---|---|---|---|---|---|---|
| | | | 8 | 9 | 10 | 11 | 12 | 13 | 14 |
| Adhesive force to SUS316 | 180° peel force | [N/25 mm] | 15 | 18.5 | 14 | 16 | 16 | 10 | 10 |
| Electrical peel force against SUS316 at 30V/30s | Initial electrical peel force | [N/25 mm] | <0.1 | <0.1 | <0.1 | <0.1 | <0.1 | <0.1 | <0.1 |
| | | Rate of decrease in adhesive force | < 90% | < 90% | < 90% | < 90% | < 90% | < 90% | < 90% |
| | Electrical peel force after storage in hot and humid environment (60°C/90% after 500 hours) | [N/25 mm] | 0.4 | 0.5 | 0.4 | 0.5 | 1 | 0.2 | 0.2 |
| | | Rate of decrease in adhesive force | < 90% | < 90% | < 90% | < 90% | < 90% | < 90% | < 90% |

Table 1 (continued)

| | | | Comparative Example | | | |
|---|---|---|---|---|---|---|
| | | | 1 | 2 | 3 | 4 |
| Composition | First polymer 1 (BA/MEA/AA = 87/10/3) | | 100 | 100 | 100 | |
| | First polymer 2 (BA/AA 95/5) | | | | | 100 |
| | Ionic liquid | AS-110 | 4 | 4 | 4 | 4 |
| | Crosslinking agent | V-05 | 0.4 | 0.4 | 0.4 | 0.4 |
| | Adsorptive inhibitor | AMINE O | 3 | 3 | 3 | 3 |
| | | Irgacor DSSG | 0.3 | 0.3 | 0.3 | 0.3 |
| | Chelate-forming metal deactivator | Irgamet 30 | 0.8 | 0.8 | 0.8 | 0.8 |
| | Ionic liquid | EMIM-MeSO3 | 0.2 | 0.2 | 0.2 | 0.2 |
| | Second polymer | Polymer 1 (CHMA/AA = 95/5) | | | | |
| | | Polymer 2 (IBXMA = 100) | | | | |
| | | Polymer 3 (CHMA/4HBA = 95/5) | | | | |
| | | Polymer 4 (CHMA/4HBA = 85/15) | | | | |
| | | Polymer 5 (ARUFON UC3000) | | | | |
| | | Polymer 6 (ARUFON UH2170) | | | | |
| | | Polymer 7 (MA/NVP = 55/45) | | 10 | 30 | |

(continued)

| | | | Comparative Example | | | |
|---|---|---|---|---|---|---|
| | | | 1 | 2 | 3 | 4 |
| Information on polymer | Second polymer Tg | [°C] | - | 36 | 36 | - |
| | Second polymer Molecular weight | | - | 4000 | 4000 | - |
| | First polymer HSP value | | 17.8 | 17.8 | 17.8 | 17.3 |
| | Second polymer HSP value | | - | 20.1 | 20.1 | - |
| | ΔHSP value | | - | 2.3 | 2.3 | - |
| Adhesive force to SUS316 | 180° peel force | [N/25 mm] | 12 | 9 | 9 | 12 |
| Electrical peel force against SUS316 at 30V/30s | Initial electrical peel force | [N/25 mm] | < 0.1 | 1 | 1 | < 0.1 |
| | | Rate of decrease in adhesive force | < 90% | 89% | 89% | < 90% |
| | Electrical peel force after storage in hot and humid environment (60°C/ 90% after 500 hours) | [N/25 mm] | 3 | 3 | 3 | 4 |
| | | Rate of decrease in adhesive force | 75% | 67% | 67% | 67% |

[Table 2]

Table 2

| | | | Example | | | | | | |
|---|---|---|---|---|---|---|---|---|---|
| | | | 15 | 16 | 17 | 18 | 19 | 20 | 21 |
| | First polymer 1 (BA/MEA/AA = 87/10/3) | | 100 | 100 | 100 | 100 | 100 | 100 | 100 |
| | First polymer 2 (BA/AA 95/5) | | | | | | | | |
| | Ionic liquid | AS-110 | 4 | 4 | 4 | 4 | 4 | 4 | 4 |
| | Crosslinking agent | V-05 | 0.4 | 0.4 | 0.4 | 0.4 | 0.4 | 0.4 | 0.4 |
| | Adsorptive inhibitor | AMINE O | 3 | 3 | 3 | 3 | 3 | 3 | 3 |
| | | Irgacor DSSG | 0.3 | 0.3 | 0.3 | 0.3 | 0.3 | 0.3 | 0.3 |
| | Chelate-forming metal deactivator | Irgamet 30 | 0.8 | 0.8 | 0.8 | 0.8 | 0.8 | 0.8 | 0.8 |
| | Ionic liquid | EMIM-MeSO3 | 0.2 | 0.2 | 0.2 | 0.2 | 0.2 | 0.2 | 0.2 |

(continued)

| | | | Example | | | | | | |
|---|---|---|---|---|---|---|---|---|---|
| | | | 15 | 16 | 17 | 18 | 19 | 20 | 21 |
| Composition | Second polymer | Polymer 1 (CHMA/AA = 95/5) | 5 | 5 | 5 | 5 | 10 | 50 | 5 |
| | | Polymer 2 (IBXMA = 100) | | | | | | | |
| | | Polymer 3 (CHMA/ 4HBA = 95/5) | | | | | | | |
| | | Polymer 4 (CHMA/ 4HBA = 85/15) | | | | | | | |
| | | Polymer 5 (ARUFON UC3000) | | | | | | | |
| | | Polymer 6 (ARUFON UH2170) | | | | | | | |
| | | Polymer 7 (MA/NVP = 55/45) | | | | | | | |
| | Tackifying resin | YS Polystar T-115 | 5 | | | | | | |
| | | YS Polystar U-130 | | 5 | | | | | |
| | | Pensel D125 | | | 1 | 5 | 10 | 50 | |
| | | Pensel D160 | | | | | | | 5 |
| Information on polymer | Second polymer Tg | [°C] | 67 | 67 | 67 | 67 | 67 | 67 | 67 |
| | Second polymer Molecular weight | | 4000 | 4000 | 4000 | 4000 | 4000 | 4000 | 4000 |
| | First polymer HSP value | | 17.8 | 17.8 | 17.8 | 17.8 | 17.8 | 17.8 | 17.8 |
| | Second polymer HSP value | | 17.9 | 17.9 | 17.9 | 17.9 | 17.9 | 17.9 | 17.9 |
| | ΔHSP value | | 0.1 | 0.1 | 0.1 | 0.1 | 0.1 | 0.1 | 0.1 |

(continued)

<table>
<tr><td colspan="3" rowspan="2"></td><td colspan="7">Example</td></tr>
<tr><td>15</td><td>16</td><td>17</td><td>18</td><td>19</td><td>20</td><td>21</td></tr>
<tr><td rowspan="2">Information on tackifying resin</td><td>Softening Point</td><td>[°C]</td><td>115</td><td>130</td><td>125</td><td>125</td><td>125</td><td>125</td><td>160</td></tr>
<tr><td>Resin type</td><td></td><td>Terpene</td><td>Terpene</td><td>Rosin</td><td>Rosin</td><td>Rosin</td><td>Rosin</td><td>Rosin</td></tr>
<tr><td>Adhesive force to SUS316</td><td>180° peel force</td><td>[N/25 mm]</td><td>12</td><td>13</td><td>13</td><td>13</td><td>13</td><td>25</td><td>13</td></tr>
<tr><td rowspan="4">Electrical peel force against SUS316 at 30V/30s</td><td rowspan="2">Initial electrical peel force</td><td>[N/25 mm]</td><td><0.1</td><td><0.1</td><td><0.1</td><td><0.1</td><td><0.1</td><td><0.1</td><td><0.1</td></tr>
<tr><td>Rate of decrease in adhesive force</td><td>< 90%</td><td>< 90%</td><td>< 90%</td><td>< 90%</td><td>< 90%</td><td>< 90%</td><td>< 90%</td></tr>
<tr><td rowspan="2">Electrical peel force after storage in hot and humid environment (60°C/90% after 500 hours)</td><td>[N/25 mm]</td><td>0.8</td><td>0.8</td><td>1</td><td>0.5</td><td>0.3</td><td>0.1</td><td>0.5</td></tr>
<tr><td>Rate of decrease in adhesive force</td><td>< 90%</td><td>< 90%</td><td>< 90%</td><td>< 90%</td><td>< 90%</td><td>< 90%</td><td>< 90%</td></tr>
</table>

Abbreviations of the second polymer, the crosslinking agent, the ionic liquid, and the additive (adsorptive inhibitor, or the like) in Tables 1 and 2 are as follows.

(Second Polymer)

Polymer 5: acrylic polymer, trade name "ARUFON UC3000", manufactured by Toagosei Co., Ltd.

Polymer 6: acrylic polymer, trade name "ARUFON UH2170", manufactured by Toagosei Co., Ltd.

(Tackifying Resin)

YS Polystar T-115: terpene-based tackifying resin, manufactured by Yasuhara Chemical Co., Ltd., Tg = 65°C, softening point: 115°C
YS Polystar U-130: terpene-based tackifying resin, manufactured by Yasuhara Chemical Co., Ltd., Tg = 80°C, softening point: 130°C
Pensel D125: rosin-based tackifying resin, manufactured by Arakawa Chemical Industries, Ltd., Tg = 75°C, softening point: 125°C
Pensel D160: rosin-based tackifying resin, manufactured by Arakawa Chemical Industries, Ltd., Tg = 110°C, softening point: 160°C

(Ionic Liquid)

AS-110: cation: 1-ethyl-3-methylimidazolium cation, anion: bis(fluorosulfonyl)imide anion, trade name: "Elexcel AS-110", manufactured by Dai-ichi Kogyo Seiyaku Co., Ltd.

(Crosslinking Agent)

V-05: polycarbodiimide resin, trade name: "Carbodilite V-05", manufactured by Nisshinbo Chemical Inc.

(Adsorptive Inhibitor)

AMINE O: 2-(8-heptadecene-1-yl)-4,5-dihydro-1H-imidazole-1-ethanol, trade name: "AMINE O", manufactured by BASF Japan Ltd.

Irgacor DSSG: sodium sebacate, trade name: "Irgacor DSSG", manufactured by BASF Japan Ltd.

(Chelate-forming Metal Deactivator)

Irgamet 30: N,N-bis(2-ethylhexyl)-[(1,2,4-triazole-1-yl)methyl]amine, trade name: "Irgamet 30", manufactured by BASF Japan Ltd.

(Ionic Liquid)

EMIM-MeSO3: manufactured by Tokyo Chemical Industry Co., Ltd.

Since the electrically debondable pressure-sensitive adhesive layers formed of the pressure-sensitive adhesive compositions of Examples 1 to 21 each contain the second polymer having a glass transition temperature (Tg) of 40°C to 180°C, each of the electrically debondable pressure-sensitive adhesive layers had a large rate of decrease in adhesive force due to voltage application even after storage in a high-temperature and high-humidity environment and was excellent in moisture and heat stability. In addition, since the electrically debondable pressure-sensitive adhesive layers formed of the pressure-sensitive adhesive compositions of Examples 15 to 21 each further contain a tackifying resin, a further improvement in the rate of decrease in adhesive force due to voltage application after storage in a high-temperature and high-humidity environment was observed.

The present invention is not limited to the embodiments described above, and can be made in various modifications within the scope of the claims, and embodiments obtained by appropriately combining technical methods disclosed in different embodiments are also included in the technical scope of the present invention.

Although various embodiments have been described above with reference to the drawings, the present invention is not limited to these examples. It is apparent to those skilled in the art that various alterations or modifications can be conceived within the scope described in the claims, and it is understood that the alterations or modifications naturally fall within the technical scope of the present invention. In addition, the components described in the above embodiments may be freely combined without departing from the spirit of the invention.

The present application is based on Japanese Patent Application (No. 2022-026640) filed on February 24, 2022 and Japanese Patent Application (No. 2021-161475) filed on September 30, 2021, and the contents of which are incorporated in the present application by reference.

REFERENCE SIGNS LIST

X1, X2, X3 pressure-sensitive adhesive sheet
1 electrically debondable pressure-sensitive adhesive layer
2 pressure-sensitive adhesive layer
3 substrate
4 conductive layer
5 conduction substrate

## Claims

1. A pressure-sensitive adhesive composition containing a first polymer as a base polymer and an ionic liquid, the pressure-sensitive adhesive composition further comprising:
   a second polymer having a glass transition temperature (Tg) of 40°C to 180°C.

2. The pressure-sensitive adhesive composition according to claim 1, wherein
   a difference in HSP value between the first polymer and the second polymer is 0 to 3.

**3.** The pressure-sensitive adhesive composition according to claim 1, wherein the second polymer comprises an organic polymer compound, and a content of the organic polymer compound in the second polymer is 1 to 50 parts by mass with respect to 100 parts by mass of the first polymer.

**4.** The pressure-sensitive adhesive composition according to claim 1, wherein an anion of the ionic liquid comprises at least one selected from the group consisting of a bis(fluorosulfonyl)imide anion and a bis(trifluoromethanesulfonyl)imide anion.

**5.** The pressure-sensitive adhesive composition according to claim 1, wherein a cation of the ionic liquid comprises at least one selected from the group consisting of a nitrogen-containing onium cation, a sulfur-containing onium cation, and a phosphorus-containing onium cation.

**6.** The pressure-sensitive adhesive composition according to claim 1, wherein a content of the ionic liquid is 0.5 parts by mass or more and 30 parts by mass or less with respect to 100 parts by mass of the first polymer.

**7.** The pressure-sensitive adhesive composition according to claim 1, wherein the first polymer comprises at least one selected from the group consisting of a polyester-based polymer, a urethane-based polymer, and an acrylic polymer having a carboxyl group, an alkoxy group, a hydroxyl group and/or an amide bond.

**8.** The pressure-sensitive adhesive composition according to claim 1, wherein the second polymer comprises a tackifying resin.

**9.** The pressure-sensitive adhesive composition according to claim 8, wherein the tackifying resin has a softening point of 100°C or higher.

**10.** The pressure-sensitive adhesive composition according to claim 8, wherein a content of the tackifying resin is 1 to 50 parts by mass with respect to 100 parts by mass of the first polymer.

**11.** The pressure-sensitive adhesive composition according to claim 8, wherein the tackifying resin is a terpene-based tackifying resin or a rosin-based tackifying resin.

**12.** The pressure-sensitive adhesive composition according to claim 1, which is used for electrical debonding.

**13.** A pressure-sensitive adhesive sheet comprising: a pressure-sensitive adhesive layer formed of the pressure-sensitive adhesive composition according to any one of claims 1 to 12.

**14.** A bonded body comprising:

the pressure-sensitive adhesive sheet according to claim 13; and
a conductive material, wherein
the pressure-sensitive adhesive layer is adhered to the conductive material.

FIG. 1

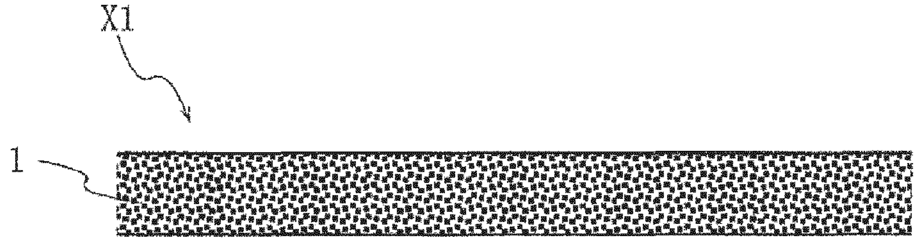


FIG. 2

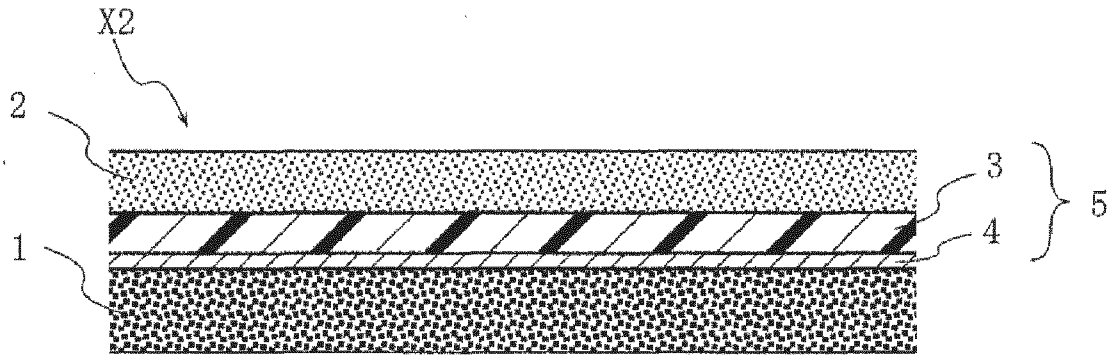


FIG. 3

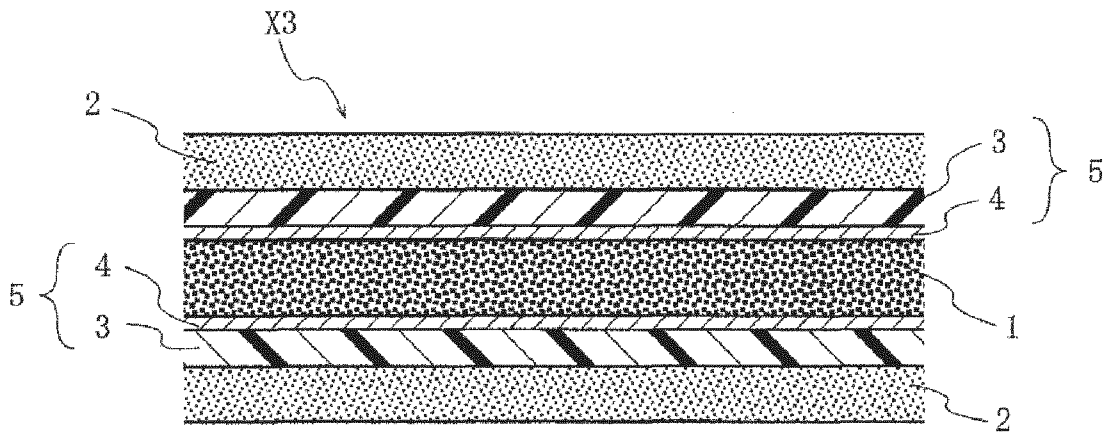


FIG. 4

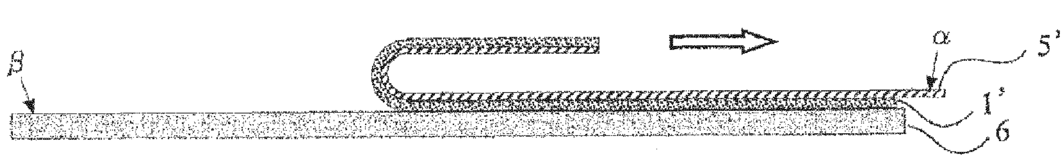

## INTERNATIONAL SEARCH REPORT

International application No.
**PCT/JP2022/036195**

### A. CLASSIFICATION OF SUBJECT MATTER

***C09J 11/06***(2006.01)i; ***C09J 11/08***(2006.01)i; ***C09J 133/00***(2006.01)i; ***C09J 167/00***(2006.01)i; ***C09J 175/04***(2006.01)i; ***C09J 201/00***(2006.01)i; ***C09J 7/38***(2018.01)i
FI: C09J201/00; C09J7/38; C09J167/00; C09J175/04; C09J133/00; C09J11/06; C09J11/08

According to International Patent Classification (IPC) or to both national classification and IPC

### B. FIELDS SEARCHED

Minimum documentation searched (classification system followed by classification symbols)

C09J11/06; C09J11/08; C09J133/00; C09J167/00; C09J175/04; C09J201/00; C09J7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-65209 A (NITTO DENKO CORP) 28 April 2016 (2016-04-28)<br>production example 10 | 1-14 |
| A | JP 2006-342191 A (NITTO DENKO CORP) 21 December 2006 (2006-12-21)<br>entire text, all drawings | 1-14 |
| P, X | WO 2022/065483 A1 (LINTEC CORP) 31 March 2022 (2022-03-31)<br>examples | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/036195**

| Patent document cited in search report | Publication date (day/month/year) | Patent family member(s) | Publication date (day/month/year) |
|---|---|---|---|
| JP 2016-65209 A | 28 April 2016 | CN 105462511 A<br>KR 10-2016-0036497 A | |
| JP 2006-342191 A | 21 December 2006 | (Family: none) | |
| WO 2022/065483 A1 | 31 March 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017064918 A
- JP 2020164778 A
- JP 2007051271 A
- JP 2022026640 A
- JP 2021161475 A


### Non-patent literature cited in the description


- Polymer Handbook. John Wiley &Sons, Inc, 1989